(19) Europäisches Patentamt
European Patent Office
Office européen des brevets

(11) EP 3 412 704 B1

(12) EUROPEAN PATENT SPECIFICATION

(45) Date of publication and mention of the grant of the patent:
**30.07.2025 Bulletin 2025/31**

(21) Application number: **16888909.5**

(22) Date of filing: **22.04.2016**

(51) International Patent Classification (IPC):
***C08G 69/16*** (2006.01) ***D01F 6/60*** (2006.01)
***D01F 1/10*** (2006.01) ***D01F 1/07*** (2006.01)
***D01F 1/08*** (2006.01) ***D01D 5/253*** (2006.01)

(52) Cooperative Patent Classification (CPC):
**C08G 69/16; D01D 5/08; D01D 5/253; D01F 1/07; D01F 1/08; D01F 1/10; D01F 6/60; D01F 8/12**

(86) International application number:
**PCT/CN2016/080024**

(87) International publication number:
**WO 2017/133085 (10.08.2017 Gazette 2017/32)**

# (54) METHOD FOR POLYMERIZATION OF NYLON 6, AND MELT DIRECT SPINNING METHOD THEREOF

VERFAHREN ZUR POLYMERISATION VON NYLON 6 UND DIREKTSCHMELZSPINNVERFAHREN DAFÜR

PROCÉDÉ DE POLYMÉRISATION DU NYLON 6, ET PROCÉDÉ DE FILAGE PAR FUSION DIRECT ASSOCIÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **01.02.2016 CN 201610071571**

(43) Date of publication of application:
**12.12.2018 Bulletin 2018/50**

(73) Proprietor: **Zhejiang Hengyi Petrochemical Research Institute Co., Ltd.**
**Zhejiang Province 311209 (CN)**

(72) Inventors:
- **WANG, Chaosheng**
  **Shanghai 201620 (CN)**
- **WANG, Huaping**
  **Shanghai 201620 (CN)**
- **TANG, Lian**
  **Shanghai 201620 (CN)**
- **LI, Yiren**
  **Shanghai 201620 (CN)**
- **PU, Hong**
  **Shanghai 201620 (CN)**
- **LI, Jianwu**
  **Shanghai 201620 (CN)**
- **WANG, Danyue**
  **Shanghai 201620 (CN)**

(74) Representative: **Franks & Co Limited**
**15 Jessops Riverside**
**Brightside Lane**
**Sheffield S9 2RX (GB)**

(56) References cited:
**CN-A- 102 358 780** **CN-A- 104 499 076**
**CN-A- 104 562 271** **CN-A- 105 669 969**
**CN-A- 110 117 835** **US-A- 4 310 659**
**US-A- 4 310 659**

- **HANS R. KRICHELDORF ET AL: "Poly( [epsilon] -caprolactone) by Combined Ring-Opening Polymerization and Polycondensation", MACROMOLECULAR CHEMISTRY AND PHYSICS., vol. 213, no. 14, 26 July 2012 (2012-07-26), DE, pages 1482 - 1488, XP055636751, ISSN: 1022-1352, DOI: 10.1002/macp.201200061**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

- K. HASHIMOTO: "Ring-opening polymerization of lactams. Living anionic polymerization and its applications", PROGRESS IN POLYMER SCIENCE., vol. 25, no. 10, 29 November 2000 (2000-11-29), GB, pages 1411 - 1462, XP055283152, ISSN: 0079-6700, DOI: 10.1016/S0079-6700(00)00018-6

## Description

### BACKGROUND OF THE INVENTION

1. Technical Field

The invention involves a polymerization method and melt direct spinning of nylon 6.

2. Description of Related Art

Due to its excellent mechanical properties and textile processing performance, the output of nylon fiber ranked No.1 in synthetic fibers area since nylon fiber is invented. As the development of polyester and the disadvantage of high cost, the output of nylon fiber stranded at second place in synthetic fibers area. In 2013, China's nylon output is 2.1128 million tons, increasing 12.44% compared to the same period of last year, and its output accounted for 6.3% of the total output of synthetic fibers. Nylon fiber has excellent physical performance compared to that of polyester fiber, such as high breaking strength, top wear resistance, good moisture absorption, elastic recovery and fatigue resistance, good dyeing performance. Nylon fiber has wide application in other industries besides garment industry and decoration, such as tire cord fabric, automotive textiles, filter materials and BCF carpet bulked yarn. There are many varieties of nylon fiber, the main varieties are nylon 6 and nylon 66 fiber, due to historical reasons and the specific conditions of different countries, each country's emphasis is also different. The United States, Britain and other countries focus producing nylon 66, and Germany, Italy, Japan and East European countries mainly produce nylon 6, China's main product in this field is also nylon 6 fiber.

Continuous hydrolysis polymerization of caprolactam is the most widely applied producing method of the polymerization of nylon 6. In nylon 6 chip production, when the polymer reaches equilibrium, the conversion of caprolactam is generally around 90%, which means that about 10% of the caprolactam and oligomer remained in the polymer (monomer accounted for about 75%, low polymer, mainly cyclic dimers, for about 25%), are commonly removed by hot water in the production process and are therefore also referred to as hot water extractable contents. During the melt spinning of nylon 6, impurities of no larger than 6 $\mu$m are allowed in the melt, and caprolactam monomer should be as few as possible, because in the high-speed spinning process, the fiber tension is large, the presence of impurities or bubbles will cause stress concentration, resulting in wire breaking phenomenon. The melting temperature of cyclic dimer is 348 °C, far higher than that of nylon 6 conventional spinning temperature. Therefore, it cannot melt and cannot participate in ring opening polymerization in molten state. Caprolactam can easily volatilize at the spinning temperature, and bubbles can be easily formed during the fiber forming process; therefore, caprolactam has become an important role affecting the spinning process. The presence of other oligomers in the melt also causes the relative molecular weight distribution to broaden. The presence of low molecular weight polymers not only affects the spinning process, but also affects the mechanical properties of the fibers. Therefore, in the spinning process of nylon 6, in order to avoid broken wire in the spinning process, hot water extractable content should be less than 1.5%.

Therefore, it is necessary to extract polyamide 6 chips before spinning. According to FZ/T 51004-2011, polycaprolactam chip hot water extractables content should be less than 0.5% (good grade), but this process needs to consume a large amount of energy and water for extraction, and it is also a waste of raw materials. Therefore, how to reduce the oligomers produced during the polymerization of caprolactam and further realize the melt spinning of polyamide 6 has become one of the restrictive factors for the development of polyamide 6 fiber production. Therefore, developing new polymerization process to reduce the oligomer content of caprolactam hydrolysis polymerization and realization of nylon 6 melt spinning has become a trend of industrial development.

At present, the main method to reduce the content of oligomers during the hydrolysis polymerization of caprolactam is to control the polymerization temperature, because caprolactam polymerization is a balanced relationship that varies with temperature. With the increase of temperature, it is more conducive to oligomers formation, especially the formation of cyclic oligomers. Therefore, contents of oligomers can be effectively controlled by controlling polymerization temperature, which is low temperature polymerization. In order to ensure that the polymerization is carried out in the liquid state, the polymerization temperature must be at least than 10°C lower than the melting point of the polyamide 6. In this case, polymerization temperature still cannot control oligomers in the range of melt direct spinning, and low temperature polymerization has another drawback, that is, slower reaction speed and lower molecular weight of polymers obtained. The process of polymerization at lower temperature is divided into two parts, one part is the melting polymerization process, a part is the process of solid phase polymerization, the solid-phase polymerization process is to obtain a polymer of sufficient molecular weight for product development, but no effective method has been found to convert a solid polymer formed at low temperatures into a suitable spinning. If the fibers are spun from a low temperature polymer, the polymer must first be melted, however, in this case, the low molecular weight compounds would be formed with the balance related to the time and temperature. The amount corresponds to the temperature at which it is melted and it is always more than that when it is polymerized at a low temperature, so that there is no advantage compared to the normal polymerization.

US4310659 discloses a two step hydrolysis and

polycondensation process followed by further polymerisation and spinning.

In the present invention, polyamide 6 prepolymer is prepared at a low temperature, the oligomer content in the melt is controlled in advance, and then, using the method of polycondensation reaction kinetics to strengthen the cyclic oligomer before a large number of generations of aggregation have completed, to obtain a certain molecular weight of nylon 6 polymer melt. In this method, the reaction time at high temperature can prevent the formation of large amounts of cyclic oligomers over time at higher melt temperatures.

## SUMMARY OF THE INVENTION

This invention provides a method of polymerization and melt direct spinning of nylon 6.

A polymerization method of nylon 6, using the method of stepwise polymerization, process is as follows: The first step is ring-opening reaction. Caprolactam, deionized water and catalyst are mixed to prepolymerization at the temperature of 150-220 °C and pressure of 0.1-5 MPa. In this part, caprolactam is formed after the formation of aminocaproic acid prepared under the effect of temperature, pressure and ring-opening water. Afterwards, aminocaproic acid reacts with caprolactam and form short polymer chains. The ring opening degree of caprolactam increase with the reaction proceed. The temperature used in this stage is low. The formation of cyclic oligomers is a thermodynamic equilibrium reaction. The low reaction temperature is beneficial to reduce the content of cyclic oligomer. Meanwhile, the polymer chains formed in this section are short, which present rigid. The activation energy of terminal-amino-bite increase when the polymer chains present rigid. Thus, the content of cyclic oligomer decrease.

The number-average molar mass, cyclic oligomer content, melt viscosity of the product of the first step are 1000-2000, 10-30 %, 1-10 Pa • s, respectively. The cyclic oligomer content is below 0.1 %.

The second step is pre-polycondensation, at a pressure of 10-200 Pa, a temperature of 180-220 °C. The main reaction of this step is polycondensation. The purpose of this section is to increase the molecular weight, and abstraction of the monomer and water under low pressure condition. When molecular weight of nylon 6 chains increases to about 5000, which is entanglement point, the viscosity of polymer melt increases greatly with the molecular weight increase. In order to control the content of oligomer, the reaction temperature must maintain relatively low level. Moreover, in order to remove small molecules, the viscosity of polymer melt must to maintain relatively low level. Thus, the molecular weight of polymer should control around the entanglement point in this section.

The number-average molar mass, cyclic oligomer content, cyclic dimer content, melt viscosity of the product of the second step are 4000-6000, 2-8 %, 0.1%, 1-100 Pa • s, respectively.

The third step is strengthening stage of polymerization kinetics, at a pressure of 10-100 Pa, a temperature of 180-220 °C increase to 220-280 °C. The molecular weight, relative viscosity and melt viscosity of the product of the third step are 11400-45600 and 2.0-5.0, respectively. The cyclic oligomer content and cyclic dimer content are below 1.5% and 0.2%. The purpose of this section is to increase molecular weight to desired value. Thus, the reaction temperature need to be raised. In order to avoid the oligomer content increase with reaction time increase, the small molecules should be dislodged from melt and molecular weight increase to desired value quickly. Thus, the melt viscosity of polymer should be relatively low. The polymerization temperature is gradually increased from 180-220°C to 220-280°C. The step is to increase the temperature of the melt as the molecular weight increases in order to ensure that the melt viscosity is at a low level. Considering the high temperature is conducive to the formation of oligomers, the gradient heating method is adopted to ensure the melt viscosity is 1000-4000 Pa·s. After the strengthening stage of the polymerization kinetics, the nylon 6 polymer is obtained.

As a preferred technical proposal:
A nylon 6 polymerization method as mentioned above, the water content is 1-20wt% of caprolactam, and the catalyst content is 1-20wt% of caprolactam

A polymerization method of nylon 6 as mentioned above, the catalyst is amino acid and/or protonic acid, the protonic acid is one or more material as follow, HCl, $H_3PO_4$, $H_2SO_4$, $HNO_3$, $NH_3$, $[Al(H_2O)_6]$.

A polymerization method of nylon 6 as mentioned above, the amino acid is aliphatic amino acid and aromatic amino acid. The structure of aliphatic amino acid is $NH_2(CH_2)_xCOOH$, in which x=1~16. The structure of aromatic amino acid exist aromatic ring in backbone and branched chain, such as phenylalanine.

A polymerization method of nylon 6 as mentioned above, the time of ring-opening reaction is 3-12 h.

A polymerization method of nylon 6 as mentioned above, the time of pre-polycondensation is 1-3 h.

A polymerization method of nylon 6 as mentioned above, the time of strengthening of polycondensation kinetics is 10-90 min.

A polymerization method of nylon 6 as mentioned above, temperature increase by multistep means the temperature increase process from 180-220 °C increase to 220-280 °C is divide into 2-10 sections, to realize the temperature increase with the reaction react.

A polymerization method of nylon 6 as mentioned above, using a liquid-phase tackifying polymerizer to realize the strengthening of polycondensation kinetics.

A polymerization method of nylon 6 as mentioned above, molecular weight stabilizing agents can be added during the ring-opening, pre-polycondensation, or/and strengthening of polycondensation kinetics. The molecular weight stabilizing agents are one or more

material as follow, monoacid, monoamine, polyatomic acid and polyamine. The addition is 0.01-10wt%, relative to caprolactam.

Monoacid, aliphatic series, $H(CH_2)_aCOOH$, a=1~16. Or aromatic series, such as benzoic acid.

Monoamine, aliphatic series, $H(CH_2)_bNH$, b=1~16. Or aromatic series, such as phenylamine.

Polyatomic acid, aliphatic diacid, $HOOC(CH_2)_cCOOH$, c=1-20. Or aromatic diacid, such as phthalandione, m-phthalic acid, terephthalic acid or naphthalic acid.

Polyamine, aliphatic diamine, $H_2N(CH_2)_aNH_2$, d=1-20. Or aromatic diamine, o-phenylenediamine, m-phenylenediamine, p-phenylenediamine or xylylenediamine.

A polymerization method of nylon 6 as mentioned above, lactam or/and lactone, corresponding polymer can be added during the ring-opening, pre-polycondensation, or/and strengthening of polycondensation kinetics, the addition is under 50wt%, relative to caprolactam.

A polymerization method of nylon 6 as mentioned above, corresponding polymer is the homopolymer or copolymer of lactam or/and lactone. Lactam is

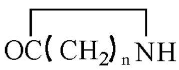
,

, lactone

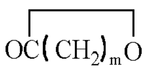
,

n=1~10, m=1~10. The molecular of homopolymer or copolymer is under 4000.

A polymerization method of nylon 6 as mentioned above, antioxygen, ultravioresistant agents, antibacterial agents, fire retardants, negative ion generator, fluorescent materials, carbon nanotubes, graphene can be added during the ring-opening, pre-polycondensation, or/and strengthening of polycondensation kinetics, the addition is 0.01-10wt%, relative to caprolactam.

A polymerization method of nylon 6 as mentioned above, antioxygen is antioxygen1010, antioxygen169 or antioxygen616. Ultravioresistant agents are salicylic acid, benzophenone series, benzotriazole series, titanium dioxide, zinc oxide, calcium carbonate, talcum powder, SEED. Antibacterial agents are nano-titanium dioxide, zinc oxide, ferric oxide, chitosan, nano-Ag, nano-Cu, quaternary ammonium salt series. Fire retardants are zinc borate, tetrabromobisphenol A, Bis(hexachlorocyclpentadiene) cyclooctane, ammonium polyphosphate, Decabromodiphenyl ether, complex of 1,3,6-(1,3,5-triazine-2,4,6-triyltriimino) tris and melamine. Negative ion generators are tourmaline, opal, qicai stone. Fluorescent materials are alkali metal chalcogenide or/and aluminate as luminous substrate, lanthanides, such as Eu, Sm, Er or/and Nd as ctivating agents.

A polymerization method of nylon 6 as mentioned above, the structure of quaternary ammonium salt is

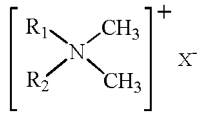
,

$R_1$, $R_2$=C8~C20, $R_1$ and $R_2$ can be the same or different. $X^-$is $Cl^-$, $Br^-$, $I^-$.

A polymerization method of nylon 6 as mentioned above, in order to accelerate tackifying, chain extenders can be added during the strengthening of polycondensation kinetics. The addition amount of chain extenders is 0.01-1.2 wt%, relative to caprolactam. The chain extenders are dioxins, bis-oxazole ketone, adipoyl biscaprolactamate, phosphate, diisocyanate. The structure of dioxins is

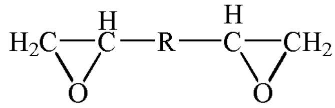
,

R=C1-C8.

This invention provides a melt directly spinning method. After strengthening of polycondensation kinetics, the nylon 6 melt is spun directly. The spinning temperature is 240-280 °C, the first spinning reel speed is 4000-4500m/min, the second spinning reel speed is 5000-6000m/min, draw ratio is 1.1-1.5, wind temperature is 15-25 °C, wind speeds is 0.5-1m/s, relative humidity is 60-90%. Finally, full-drawn yarn is obtained.

A melt directly spinning method of nylon 6 as mentioned above. After strengthening of polycondensation kinetics, the nylon 6 melt is spun directly. The spinning temperature is 240-280 °C, the spinning speed is 700-1500m/min, wind temperature is 15-25 °C, wind speeds is 0.5-1 m/s, relative humidity is 60-80%. Finally, unoriented yarn is obtained.

A melt directly spinning method of nylon 6 as mentioned above. After strengthening of polycondensation kinetics, the nylon 6 melt is spun directly. The spinning temperature is 240-280 °C, the spinning speed is 4000-4500m/min, wind temperature is 15-25 °C, wind speeds is 0.3-0.6 m/s, relative humidity is 60-80%. Finally, pre-oriented yarn is obtained.

A melt-spinning method of nylon 6 polymer as mentioned above, the nylon 6 polymer spun immediately in accordance with a Nylon 6 spinning process, after the polycondensation reaction kinetics strengthening process. The spinning temperature is 240-280°C, the cooling air temperature is 15-20°C and the wind speed is 0.3-0.5m/s, the relative humidity is 80%-90% to obtain a highly oriented silk.

A melt-spinning method of nylon 6 polymer as

described above, the nylon 6 polymer is immediately spun into bulked silk in accordance the with Nylon 6 spinning process, after the polycondensation reaction kinetics strengthening process. the spinning temperature is 240-280°C, the cooling air temperature is 20-30°C and the wind speed is 0.3-1m/s, the relative humidity is 60%-80%, the feeding roll temperature is 60-120°C, the stretching roll temperature is 100-190°C, the feeding speed is 300-1000m/min, the stretching speed of 1000-3500m/min, the stretching multiples is 3.5-5 times, the deformation hot air temperature is 190-230°C, the air jet pressure is 196kPa-490kPa, the winding speed is 600-3000m/min, the cooling air temperature is 25°C.

A melt-spinning method of nylon 6 polymer as described above, The nylon 6 polymer is directly applied to composite spinning after the polycondensation kinetic strengthening process is finished, and the composite spinning is a side-by-side type, a sheath-core type, a sea-island type, a petal type or a multi-core type composite spinning; the composite spinning in nylon 6 another component is one of 6T, nylon 612, nylon nylon 610, nylon 1212, nylon 46, nylon 410, nylon 11, nylon 12, nylon 26, nylon 212, nylon, branched water-soluble poly a vinegar. The mass ratio of the nylon 6 polymer to another component is 3: 7-7: 3.

A melt-spinning method of nylon 6 polymer as described above, The shape of the spinneret is triangular, cross, polygon, hollow fiber, U, T, Y, polygon, or zigzag.

A melt-spinning method of nylon 6 polymer as described above, the nylon 6 polymer enhanced in polycondensation kinetics after the end of the process, in the melt conveying process, add polymer slices, mixing immediately in accordance with the nylon 6 spinning process of direct spinning, the polymer slice is added to nylon 6 melt 1-30wt%.

A melt-spinning method of nylon 6 polymer as described above, the matrix of functional masterbatch or color masterbatch is one or more of nylon, polyester, polyethylene glycol.

A melt-spinning method of nylon 6 polymer as described above, Nylon is one or more of nylon 6, nylon 6T, nylon 612, nylon 610, nylon 1212, nylon 46, nylon 410, nylon 11, nylon 12, nylon 26, nylon 212; Polyester is one or more of polyethylene terephthalate, polybutylene terephthalate, polytrimethylene terephthalate, and water-soluble polyester; Polyethylene glycol has a molecular weight in the range of 400-20000, The polyethylene glycol is either the hydroxyl group or the polyethylene glycol, which is modified to be a spindle or amino group.

A melt-spinning method of nylon 6 polymer as described above, Described in the functional masterbatch contains functional additives are antioxidants, uv resistant agent, antibacterial agent, flame retardant, anion generation materials, fluorescent material, carbon nanotubes or graphene, and the content is 10-30wt% of functional masterbatch.

A melt-spinning method of nylon 6 polymer as described above, The antioxidant is antioxidant 1010, antioxidant 168 or antioxidant 616; The anti-uv agent is salicylic acid, diphenylketone and triazole, titanium dioxide, zinc oxide, calcium carbonate, talcum powder, SEED; Antibacterial agent is nano titanium dioxide, zinc oxide, iron oxide, chitosan, nano silver, nano copper or quaternary ammonium compounds; The flame retardants are zinc borate, tetraosmol bisphenol A, bis(hexachlorocyclopentadiene)cyclooctane, ammonium polyphosphate, decabromodiphenyl ether or 1,3,6-tris(4,6-diamino) A 2-thio-triazine) mixture of hexane and cyanuric acid; The anion generating material is bizarre stone, tourmaline, opal, or sculpted stone; Fluorescent materials are based on alkaline earth metal sulfide, aluminate as a luminescent substrate, with rare earth copper-based elements of europium, samarium, erbium or neodymium as an activator.

A method of melt spinning a nylon 6 polymer as described above, the molecular formula is

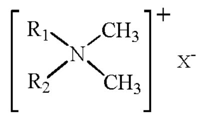

Among them, $R_1$, $R_2$=C8~C20, $R_1$, $R_2$ is the same or different;$X^-$is $Cl^-$, $Br^-$, $I^-$.

A melt-spinning method of nylon 6 polymer as described above, the colorants used in the masterbatch are one or more of the phthalocyanine red, phthalocyanine blue, phthalocyanine green, fast red, macromolecular red, macromolecular yellow, permanent yellow, permanent Purple, azo red, cadmium red, cadmium yellow, titanium dioxide, carbon black, iron oxide red, yellow iron oxide, pigment red 179, pigment blue 60, pigment green 36, pigment yellow 214, pigment orange 43, pigment orange 68, pigment brown 41, pigment yellow 184, solvent violet 59, solvent violet 37, solvent red 143, solvent red 181, solvent blue 94, solvent blue 132, solvent green 29, solvent yellow 135, solvent yellow 167.

A melt-spinning method of nylon 6 polymer as described above, the nylon 6 polymer enhanced in polycondensation kinetics after the end of the process, in the melt conveying process, add polymer slices, mixing immediately in accordance with the nylon 6 spinning process of direct spinning, the polymer slice is added to nylon 6 melt 5-50wt%.

A melt-spinning method of nylon 6 polymer as described above, the polymer chips being one or more of polyester, nylon, and polyethylene glycol.

A melt-spinning method of nylon 6 polymer as described above, Polyester is one or more of polyethylene terephthalate, polybutylene terephthalate, polytrimethylene terephthalate, and water-soluble polyester; Nylon is one or more of nylon 6, nylon 6T, nylon 612, nylon 610, nylon 1212, nylon 46, nylon 410, nylon 11, nylon 12, nylon 26, nylon 212; Polyethylene glycol has a molecular weight in the range of 400-20000, The polyethylene glycol is either the hydroxyl group or the polyethylene glycol, which is modified to be a spindle or amino group.

The invention also provides a method of a nylon 6 polymer spun into fibers and woven fabric. Nylon 6 fiber is made by spinning the nylon polymer and then woven or knitted to form a fabric which is one of plain, twill and satin and then dyed to obtain fabrics of different specifications and colors.

Fabric as mentioned above, the dyeing process of the fabric is as follows: Pretreatment desizing-Hot water cleaning fabric-Heat up the dyeing-Fix color-Cooling cleaning-Fabric out of the water stereotypes-Product testing-Finished roll.

Fabric as mentioned above, the pretreatment of desizing temperature is 60-800°C, the desizing time is 6-12h, and its desizing agent is used. The formula is: pure alkali 10-20g/L, degreaser 10-15g/L.

Fabric as mentioned above, the temperature dyeing process is: the initial dyeing temperature is 30-400°C, the rate of heating is 1-3 C/min, heating to 90-95 °C and heat preservation for 40min.The concentration of dye is 0.5-2(omf), and the bath ratio is 1:10-200.

Fabric as mentioned above, The fixing process for solid color temperature is 90-950°C, time is 20-60min, The concentration of fixing agent is 0.5-2%(omf) and the bath ratio is 1:10-200.

Fabric as mentioned above, in the dyeing and fixing process, appropriate to add some additives, the adding amount is 5-10 g/L, the assistant is NORM02, which belongs to water softener. The leveling agent is ACD03 or ACD16. The retarding agent is ammonium sulfate.

The invention provides a nylon 6 polymerization device, the function of the silo is to store the hexephthalamide, which is connected to the heating tank of the raw material through the pipe. The function of the heating tank is to melt the caprolactam, and the pressurized open loop cauldron is connected to the heating tank of the raw material through the pipe. Pressurized open loop cauldron role is through the pressure to promote the hydrolysis of caprolactam open-loop to obtain cyclic oligomers with low content of prepolymer. The polycondensation kettle is connected with the pressurized open-loop kettle through the pipeline. The role of the polycondensation kettle is the precondensation of the product of the pressurized open-loop kettle to molecular weight near the molecular chain entanglement point, and a large number of unreacted monomer is removed, at this point the melt viscosity is lower, so the conditions of condensation are not high. The liquid thickener is connected with the polycondensation reactor through a pipeline. The role of liquid phase thickening kettle is the polycondensation kettle product by high vacuum polycondensation reaction kinetics enhanced to the target molecular weight, and the unreacted monomer and water quickly extracted, in this case the melt viscosity is high, so the polycondensation conditions require high. Polycondensation reactor, liquid-phase tackifying kettle are respectively connected with the buffer tank through the pipeline, the role of the buffer tank is to collect the small molecules extracted by polycondensation kettle and liquid thickener, and transport it to the concentration tank. The concentrator and the buffer tank are connected through the pipeline. The function of the concentrated tank is to concentrate the monomer conveyed in the buffer tank and redistribute it to the heating tank of the raw material and continue to participate in the reaction. The concentrate sent to the concentrator is reused. The obtained melt is directly transported to the spinning component for spinning, then weaving, dyeing and finishing, and getting the final product.

Mechanism description:

The present invention adopts low-temperature polymerization to prepare a prepolymer and realizes effective control of the cyclic dimer, mainly relying on the following mechanism: The reactions occurring during the hydrolyzation of caprolactam are reversible equilibrium reactions. The reaction to form a cyclic dimer is mainly an amino-terminal occlusion reaction, and its reaction can be expressed by the following equation:

$$Pn+C2 \rightarrow Pn+2$$

Among them, the positive reaction is a cyclic dimer ring-opening addition reaction, and the activation energy is Ea1=89.12KJ/mol; The reverse reaction is an amino-terminal occlusion reaction. The activation energy of the reaction is Ea2=102.38 KJ/mol, which is the most important way to form a cyclic dimer.

Temperature is the most important factor affecting oligomer content in caprolactam polymerization system. The following formula is Arrhenius formula:

$$k = Ae^{-E_a/RT}$$

Take logarithm

$$lnk = lnA - E_a/RT$$

From above, the relationship between reaction rate constant k and temperature can be obtained, as can be seen from the formula, the higher the activation energy of the reaction, the more sensitive the reaction rate constant to the temperature change, and the activation energy of the addition polymerization of the cyclic dimer is less than the activation energy of the ring formation reaction. Therefore, polymerization temperature, is advantageous to the cyclization reaction, so that the levels of low molecular material are increased.

Beneficial effects

1. The polymerization process of the invention is simple, while improving the utilization rate of caprolactam, reducing energy consumption and reducing the production cost of nylon 6.
2. The invention combines the kinetics of polycondensation reaction to enhance the reaction speed of caprolactam hydrolysis polymerization and improve the production efficiency.
3. In the present invention, the prepolymer is prepolymerized at a low temperature under the condition of 150-220°C. to ensure that the prepolymer in the system has high activity and contains lower cyclic oligomers, especially cyclic dimers. Then, through polymerization of the polycondensation reaction, polymerization is completed before a large amount of cyclic oligomer is formed, and a nylon 6 polymer melt with a certain molecular weight is obtained. This method can avoid the formation of large amounts of cyclic oligomers over time at high temperatures in the reaction period at high temperatures, effectively reducing the content of cyclic oligomers, and the extractables content of the melt obtained ≤2%, the content of cyclic dimer≤0.2%, the product relative viscosity of 2.0 ~ 6.0, can be used for melt spinning polyamide melt.
4. According to the polymerization process of the present invention, modified components can be added to the pressurized open-loop reactor, the polycondensation reactor, and the liquid-phase viscosity-increasing reactor to realize the functional and flexible production of nylon 6 and to increase the added value of the product.

## BRIEF DESCRIPTION OF THE DRAWINGS

FIG. 1 is a structural diagram of the unstable treatment of cyclic dimers.
FIG. 2 is a schematic diagram of the polymerization process of nylon 6

1: silo; 2: valve; 3: raw material heating tank; 4: pressurized open-loop kettle; 5: polycondensation kettle; 6: liquid phase thickening kettle; 7: buffer tank;

## DETAILED DESCRIPTION OF THE EMBODIMENTS

Hereinafter, the present invention will be described in more detail by the following examples. It should be noticed that these examples are only for illustrating the present invention and are not intended to limit the scope of the present invention. In addition, it should be noticed that after reading the content of the present invention, those skilled in this field can make various modifications or changes to the present invention, and these equivalent forms also apply to the scope of the appended claims of this application.

EXAMPLE 1 NYLON 6 POLYMERIZATION METHOD

A nylon 6 polymerization method is prepared by a stepwise polymerization method, and the specific preparation method is as follows:

The first stage is a ring-opening reaction stage: prepolymerization of caprolactam, water and catalyst at a temperature of 150°C and a pressure of 5 MPa, the ring-opening reaction time is 3 h; wherein the water content is 1 wt% of caprolactam, the catalyst The content is 20wt% of caprolactam, the catalyst is an aliphatic amino acid, and the molecular formula is $NH2(CH2)xCOOH$, wherein x=1;
The obtained product has a number average molecular weight of 1000, an oligomer content of 30%, a cyclic dimer content of 0.1% or less, and a melt viscosity of 1 Pa·s;
The second stage is a pre-polycondensation stage: under the conditions of a pressure of 10 Pa and a temperature of 220°C, the product obtained by the ring-opening reaction is subjected to a polycondensation reaction, and the pre-polycondensation reaction time is 1 h;
The obtained prepolymer had a melt molecular weight of 4000, an oligomer content of 2%, a cyclic dimer content of 0.1%, and a melt viscosity of 10 Pa·s. FIG. 1 is a cyclic dimer destabilization treatment. Structure diagram
The third stage is the kinetic strengthening stage of the polycondensation reaction: polymerization at a pressure of 10 Pa, and the polymerization temperature is gradually increased from 220°C to 280°C (divided into 2 stages, the first stage is raised from 220°C to 250°C, the second stage is from 250°C rose to 280°C), the polycondensation reaction kinetic strengthening process time is 90 min;
The obtained melt had a molecular weight of 11,400, a relative viscosity of 2.0, an oligomer content of 1.5% or less, and a cyclic dimer content of 0.2% or less. After the kinetic strengthening of the polycondensation reaction, a nylon 6 polymer is obtained.

EXAMPLE 2 NYLON 6 POLYMERIZATION METHOD

A nylon 6 polymerization method is prepared by a stepwise polymerization method, and the specific preparation method is as follows:

The first stage is a ring-opening reaction stage: prepolymerization is carried out by mixing caprolactam, water and a catalyst at a temperature of 220°C and a pressure of 0.1 MPa, and the ring-opening reaction

time is 12 h; wherein the water content is 20 wt% of caprolactam, The catalyst content is 1% by weight of caprolactam, the catalyst is an aliphatic amino acid, and the molecular formula is NH2(CH2)xCOOH, wherein x=16;

The obtained product has a number average molecular weight of 1500, an oligomer content of 20%, a cyclic dimer content of 0.1% or less, and a melt viscosity of 5 Pa·s;

The second stage is a pre-polycondensation stage: the product obtained by the ring-opening reaction is subjected to a polycondensation reaction under the conditions of a pressure of 200 Pa and a temperature of 180°C, and the pre-polycondensation reaction time is 3 h;

The obtained prepolymer has a melt molecular weight of 5,000, an oligomer content of 4%, wherein the cyclic dimer content is 0.1%, and the melt viscosity is 50 Pa·s;

The third stage is the kinetic strengthening stage of the polycondensation reaction: polymerization at a pressure of 100 Pa, and the polymerization temperature is gradually increased from 180°C to 220°C (divided into 4 stages, respectively 180°C-190°C-200°C-210°C-220°C), the kinetic strengthening process time of the polycondensation reaction is 10 min;

The obtained melt has a molecular weight of 20520, a relative viscosity of 2.8, an oligomer content of 1.5% or less, wherein the cyclic dimer content is 0.2% or less; and a nylon 6 polymer is obtained after the kinetic strengthening of the polycondensation reaction is completed.

EXAMPLE 3 NYLON 6 POLYMERIZATION METHOD

A nylon 6 polymerization method is prepared by a stepwise polymerization method, and the specific preparation method is as follows:

The first stage is a ring-opening reaction stage: prepolymerization of caprolactam, water and catalyst at a temperature of 180°C and a pressure of 1 MPa, the ring-opening reaction time is 5 h; wherein the water content is 8 wt% of caprolactam, the catalyst The content is 15% by weight of caprolactam, the catalyst is an aliphatic amino acid, and the formula is NH2(CH2)xCOOH, wherein x=8;

The obtained product has a number average molecular weight of 2000, an oligomer content of 10%, a cyclic dimer content of 0.1% or less, and a melt viscosity of 100 Pa·s;

The second stage is a pre-polycondensation stage: the product obtained by the ring-opening reaction is subjected to a polycondensation reaction under the conditions of a pressure of 100 Pa and a temperature of 200°C, and the pre-polycondensation reaction time is 1.5 h;

The obtained prepolymer has a melt molecular weight of 6000, an oligomer content of 2%, wherein the cyclic dimer content is 0.1%, and the melt viscosity is 100 Pa·s;

The third stage is the kinetic strengthening stage of polycondensation reaction: polymerization under the condition of pressure of 50Pa, the polymerization temperature is gradually increased from 200°C to 280°C (divided into 6 stages, respectively 200°C-210°C-220°C-230°C-240°C-260°C-280°C), the kinetic strengthening process time of the polycondensation reaction is 10min;

The obtained melt had a molecular weight of 34,200, a relative viscosity of 4.0, an oligomer content of 1.5% or less, wherein the cyclic dimer content is 0.2% or less, and a nylon 6 polymer is obtained after the kinetic strengthening of the polycondensation reaction.

EXAMPLE 4 NYLON 6 POLYMERIZATION METHOD

A nylon 6 polymerization method is prepared by a stepwise polymerization method, and the specific preparation method is as follows:

The first stage is a ring-opening reaction stage: prepolymerization of caprolactam, water and catalyst at a temperature of 200°C and a pressure of 3 MPa, the ring-opening reaction time is 8 h; wherein the water content is 15 wt% of caprolactam, the catalyst The content is 10wt% of caprolactam, the catalyst is an aliphatic amino acid, and the molecular formula is NH2(CH2)xCOOH, wherein x=10;

The obtained product has a number average molecular weight of 1800, an oligomer content of 15%, a cyclic dimer content of 0.1% or less, and a melt viscosity of 60 Pa·s;

The second stage is a pre-polycondensation stage: the product obtained by the ring-opening reaction is subjected to a polycondensation reaction under the conditions of a pressure of 150 Pa and a temperature of 210°C, and the pre-polycondensation reaction time is 2 h;

The obtained prepolymer has a melt molecular weight of 4500 and an oligomer content of 6%, wherein the cyclic dimer content is 0.1%, and the melt viscosity is 80 Pa·s;

The third stage is the kinetic strengthening stage of polycondensation reaction: polymerization under the condition of pressure 80 Pa, the polymerization temperature is gradually increased from 210°C to 280°C (divided into 5 stages, respectively 210°C-220°C-230°C-240°C-260°C-280°C), the kinetic strengthening process time of the polycondensation reaction is 20 min;

The obtained melt has a molecular weight of 13680, a relative viscosity of 2.2, an oligomer content of 1.5% or less, wherein the cyclic dimer content is

0.2% or less; and a nylon 6 polymer is obtained after the kinetic strengthening of the polycondensation reaction is completed.

EXAMPLE 5 NYLON 6 POLYMERIZATION METHOD

A nylon 6 polymerization method is prepared by a stepwise polymerization method, and the specific preparation method is as follows:

The first stage is a ring-opening reaction stage: prepolymerization of caprolactam, water and catalyst at a temperature of 150°C and a pressure of 5 MPa, the ring-opening reaction time is 10 h; wherein the water content is 1 wt% of caprolactam, the catalyst The content is 20% by weight of caprolactam, and the catalyst is phenylalanine;

The obtained product has a number average molecular weight of 1200, an oligomer content of 25%, a cyclic dimer content of 0.1% or less, and a melt viscosity of 6 Pa·s;

The second stage is a pre-polycondensation stage: the product obtained by the ring-opening reaction is subjected to a polycondensation reaction under the conditions of a pressure of 10 Pa and a temperature of 220°C, and the pre-polycondensation reaction time is 2 h;

The obtained prepolymer has a melt molecular weight of 5,500, an oligomer content of 5%, wherein the cyclic dimer content is 0.1%, and the melt viscosity is 75 Pa·s;

The third stage is the kinetic strengthening stage of the polycondensation reaction: polymerization at a pressure of 10 Pa, and the polymerization temperature is gradually increased from 220°C to 280°C (divided into 6 stages, respectively 220°C-230°C-240°C-250°C-260°C-270°C-280°C), the kinetic strengthening process time of the polycondensation reaction is 30min;

The obtained melt had a molecular weight of 22,800, a relative viscosity of 3.0, an oligomer content of 1.5% or less, and a cyclic dimer content of 0.2% or less; and a nylon 6 polymer is obtained after the kinetic strengthening of the polycondensation reaction is completed.

EXAMPLE 6 NYLON 6 POLYMERIZATION METHOD

A nylon 6 polymerization method is prepared by a stepwise polymerization method, and the specific preparation method is as follows:

The first stage is a ring-opening reaction stage: prepolymerization of caprolactam, water and catalyst at a temperature of 200°C and a pressure of 3 MPa, the ring-opening reaction time is 8 h; wherein the water content is 15 wt% of caprolactam, the catalyst The content is 10wt% of caprolactam, the catalyst is HCl; at the same time adding molecular weight stabilizer $H(CH2)aCOOH$, wherein a=16, the added amount is 0.01wt% of caprolactam; and the lactam is added, the added amount is 49wt% of caprolactam; At the same time, the antioxidant 1010 is added in an amount of 0.01 wt% of caprolactam; and the chain extender dioxirane is added, wherein the formula is R=C1, and the chain extender is added in an amount of 0.01 wt% of caprolactam;

The obtained product has a number average molecular weight of 1900, an oligomer content of 25%, a cyclic dimer content of 0.1% or less, and a melt viscosity of 10 Pa·s;

The second stage is a pre-polycondensation stage: the product obtained by the ring-opening reaction is subjected to a polycondensation reaction under the conditions of a pressure of 150 Pa and a temperature of 210°C, and the pre-polycondensation reaction time is 2.5 h;

The obtained prepolymer has a melt molecular weight of 5,200, an oligomer content of 7%, wherein the cyclic dimer content is 0.1%, and the melt viscosity is 90 Pa·s;

The third stage is the kinetic strengthening stage of the polycondensation reaction: polymerization is carried out under the pressure of 80Pa, and the polymerization temperature is gradually increased from 210°C to 280°C (divided into 7 stages, respectively 210°C-220°C-230°C-240°C-250°C-260°C-270°C-280°C), the kinetic strengthening process time of the polycondensation reaction is 40 min;

The obtained melt has a molecular weight of 29640, a relative viscosity of 3.6, an oligomer content of 1.5% or less, wherein the cyclic dimer content is 0.2% or less; and a nylon 6 polymer is obtained after the kinetic strengthening of the polycondensation reaction is completed.

EXAMPLE 7 NYLON 6 POLYMERIZATION METHOD

A nylon 6 polymerization method is prepared by a stepwise polymerization method, and the specific preparation method is as follows:

The first stage is a ring-opening reaction stage: prepolymerization of caprolactam, water and catalyst at a temperature of 200°C and a pressure of 3 MPa, the ring-opening reaction time is 8 h; wherein the water content is 15 wt% of caprolactam, the catalyst The content is 10% by weight of caprolactam, the catalyst is $H3PO4$; and the lactone is added at the same time, the added amount is 40% by weight of caprolactam;

The obtained product has a number average molecular weight of 1600, an oligomer content of 15%, a cyclic dimer content of 0.1% or less, and a melt viscosity of 30 Pa·s;

The second stage is a pre-polycondensation stage:

the product obtained by the ring-opening reaction is subjected to a polycondensation reaction at a pressure of 150 Pa and a temperature of 210°C, and the pre-polycondensation reaction time is 1 h; and the molecular weight stabilizer H(CH 2 ) bNH 2 is added simultaneously, wherein b =16, the addition amount is 2wt% of caprolactam; at the same time, adding anti-UV agent salicylic acid, adding 10wt% of caprolactam; adding chain extender dioxirane, molecular formula, wherein R=C8, chain extender The amount added is 1.2 wt% of caprolactam;

The obtained prepolymer has a melt molecular weight of 4500 and an oligomer content of 7%, wherein the cyclic dimer content is 0.1%, and the melt viscosity is 90 Pa·s;

The third stage is the kinetic strengthening stage of the polycondensation reaction: polymerization is carried out under the pressure of 80Pa, and the polymerization temperature is gradually increased from 210°C to 280°C (divided into 7 stages, respectively 210°C-220°C-230°C-240°C-250°C-260°C-270°-C-280°C), the kinetic strengthening process time of polycondensation reaction is 50min;

The obtained melt has a molecular weight of 33060, a relative viscosity of 3.9, an oligomer content of 1.5% or less, wherein the cyclic dimer content is 0.2% or less; and a nylon 6 polymer is obtained after the kinetic strengthening of the polycondensation reaction is completed.

EXAMPLE 8 NYLON 6 POLYMERIZATION METHOD

A nylon 6 polymerization method is prepared by a stepwise polymerization method, and the specific preparation method is as follows:

The first stage is a ring-opening reaction stage: prepolymerization of caprolactam, water and catalyst at a temperature of 200°C and a pressure of 3 MPa, the ring-opening reaction time is 10 h; wherein the water content is 15 wt% of caprolactam, the catalyst The content is 10% by weight of caprolactam, and the catalyst is $H_2SO_4$;

The obtained product has a number average molecular weight of 2000, an oligomer content of 10%, a cyclic dimer content of 0.1% or less, and a melt viscosity of 10 Pa·s;

The second stage is the pre-polycondensation stage: the product obtained by the ring-opening reaction is subjected to a polycondensation reaction under the conditions of a pressure of 150 Pa and a temperature of 210°C, and the pre-polycondensation reaction time is 3 h; at the same time, a lactam homopolymer (n=1, molecular weight) is added. 2000), the amount added is 30% by weight of caprolactam; at the same time the chain extender bisoxazolone is added, the chain extender is added in an amount of 0.1% by weight of caprolactam;

The obtained prepolymer has a melt molecular weight of 5,700, an oligomer content of 2%, wherein the cyclic dimer content is 0.1%, and the melt viscosity is 100 Pa·s;

The third stage is the kinetic strengthening stage of the polycondensation reaction: polymerization is carried out under the pressure of 80Pa, and the polymerization temperature is gradually increased from 210°C to 280°C (divided into 7 stages, respectively 210°C-220°C-230°C-240°C-250°C-260°C-270°-C-280°C), the kinetic strengthening process time of the polycondensation reaction is 60min; and the molecular weight stabilizer dibasic acid HOOC(CH2)cCOOH is added, wherein c=20, the added amount is 10wt% of caprolactam; Adding a quaternary ammonium salt compound of the formula of the antibacterial agent, wherein R1, R2=C8, R1 and R2 are the same, X- is Cl-, and the added amount is 2% by weight of caprolactam;

The obtained melt has a molecular weight of 45,600, a relative viscosity of 5.0, an oligomer content of 1.5% or less, wherein the cyclic dimer content is 0.2% or less; and a nylon 6 polymer is obtained after the kinetic strengthening of the polycondensation reaction is completed.

EXAMPLE 9 NYLON 6 POLYMERIZATION METHOD

A nylon 6 polymerization method is prepared by a stepwise polymerization method, and the specific preparation method is as follows:

The first stage is a ring-opening reaction stage: prepolymerization of caprolactam, water and catalyst at a temperature of 200°C and a pressure of 3 MPa, the ring-opening reaction time is 5 h; wherein the water content is 15 wt% of caprolactam, the catalyst The content is 10wt% of caprolactam, the catalyst is $HNO_3$ and $NH_3$, the mass ratio is 2:1; the flame retardant zinc borate is added at the same time, the added amount is 5wt% of caprolactam

The obtained product has a number average molecular weight of 1500, an oligomer content of 25%, a cyclic dimer content of 0.1% or less, and a melt viscosity of 8 Pa·s;

The second stage is the pre-polycondensation stage: the product obtained by the ring-opening reaction is subjected to a polycondensation reaction under the conditions of a pressure of 150 Pa and a temperature of 210°C, and the pre-polycondensation reaction time is 2 h; and the chain extender bisacyl dicaprolactam is added at the same time, and the chain extender is added. The amount added is 1% by weight of caprolactam;

The obtained prepolymer has a melt molecular weight of 4,500, an oligomer content of 2%, wherein

the cyclic dimer content is 0.1%, and the melt viscosity is 10 Pa·s;

The third stage is the kinetic strengthening stage of polycondensation reaction: using liquid phase thickening kettle, the polymerization is carried out under the condition of pressure 80 Pa, and the polymerization temperature is gradually increased from 210°C to 280°C (divided into 7 stages, 210°C-220°C-respectively) 230°C -240°C -250°C -260°C -270°C -280°C), the polycondensation reaction kinetic strengthening process time is 70 min; at the same time adding the molecular weight stabilizer benzoic acid and aniline (benzoic acid and aniline mass ratio of 2:1), The stabilizer is added in an amount of 4% by weight of caprolactam; and the lactam copolymer (n=10, molecular weight 3000) is added in an amount of 20% by weight of caprolactam;

The obtained melt has a molecular weight of 39,900, a relative viscosity of 4.5, an oligomer content of 1.5% or less, wherein the cyclic dimer content is 0.2% or less; and a nylon 6 polymer is obtained after the kinetic strengthening of the polycondensation reaction is completed.

EXAMPLE 10 NYLON 6 POLYMERIZATION METHOD

A nylon 6 polymerization method is prepared by a stepwise polymerization method, and the specific preparation method is as follows:

The first stage is a ring-opening reaction stage: prepolymerization of caprolactam, water and catalyst at a temperature of 200°C and a pressure of 3 MPa, the ring-opening reaction time is 6 h; wherein the water content is 15 wt% of caprolactam, the catalyst The content is 10wt% of caprolactam, the catalyst is HNO3, NH3 and [Al(H2O)6] (HNO3, NH3 and [Al(H2O)6] mass ratio 1:1:1); simultaneously adding lactone homopolymer ( m=1, molecular weight 1000), the amount added is 10% by weight of caprolactam;

The obtained product has a number average molecular weight of 2000, an oligomer content of 30%, a cyclic dimer content of 0.1% or less, and a melt viscosity of 5 Pa·s;

The second stage is the pre-polycondensation stage: the product obtained by the ring-opening reaction is subjected to a polycondensation reaction under the conditions of a pressure of 150 Pa and a temperature of 180°C, and the pre-polycondensation reaction time is 3 hours; and the molecular weight stabilizer diamine H2N(CH2)dNH2 is simultaneously added. (where d=20) and aromatic dibasic acid phthalic acid (the mass ratio of diamine and phthalic acid is 1:2), the stabilizer is added in an amount of 8 wt% of caprolactam; Ice stone, added in an amount of 8 wt% of caprolactam;

The obtained prepolymer has a melt molecular weight of 4000, an oligomer content of 2%, wherein the cyclic dimer content is 0.1%, and the melt viscosity is 800 Pa·s;

The third stage is the kinetic strengthening stage of polycondensation reaction: using liquid phase thickening kettle, polymerization under the condition of pressure 80Pa, the polymerization temperature is gradually increased from 180°C to 280°C (divided into 10 stages, respectively 180°C -190°C-200°C-210°C-220°C-230°C-240°C-250°C-260°C-270°C-280°C), polycondensation reaction kinetic strengthening process time is 80 min; at the same time adding chain extender phosphate, chain extender The amount added is 0.5% by weight of caprolactam;

The obtained melt had a molecular weight of 15,960, a relative viscosity of 2.5, an oligomer content of 1.5% or less, and a cyclic dimer content of 0.2% or less; and a nylon 6 polymer is obtained after the kinetic strengthening of the polycondensation reaction.

EXAMPLE 11 NYLON 6 POLYMERIZATION METHOD

A nylon 6 polymerization method is prepared by a stepwise polymerization method, and the specific preparation method is as follows:

The first stage is a ring-opening reaction stage: prepolymerization of caprolactam, water and catalyst at a temperature of 200°C and a pressure of 3 MPa, the ring-opening reaction time is 8 h; wherein the water content is 15 wt% of caprolactam, the catalyst The content is 10% by weight of caprolactam, the catalyst is H3PO4; and the lactone copolymer (m=10, molecular weight 3000) is added, and the added amount is 40% by weight of caprolactam;

The obtained product has a number average molecular weight of 1800, an oligomer content of 20%, a cyclic dimer content of 0.1% or less, and a melt viscosity of 90 Pa·s;

The second stage is a pre-polycondensation stage: the product obtained by the ring-opening reaction is subjected to a polycondensation reaction at a pressure of 150 Pa and a temperature of 210°C, and the pre-polycondensation reaction time is 1 h; and the molecular weight stabilizer H(CH 2 ) bNH 2 is added simultaneously, wherein b =16, the amount added is 0.01 wt% of caprolactam;

The obtained prepolymer has a melt molecular weight of 5,000, an oligomer content of 5%, wherein the cyclic dimer content is 0.1%, and the melt viscosity is 950 Pa·s;

The third stage is the kinetic strengthening stage of the polycondensation reaction: polymerization is carried out under the pressure of 80Pa, and the polymerization temperature is gradually increased from 210°C to 280°C (divided into 7 stages, respectively 210°C-220°C-230°C-240°C-250°C-260°C-270°-C-280°C), the kinetic strengthening process of polycondensation reaction is 50min; at the same time, a fluorescent material with aluminate as the luminescent substrate and rare earth lanthanide lanthanum as activator is added, and the amount of caprolactam is added. 10wt%; at the same time adding a chain extender diisocyanate, the chain extender is added in an amount of 0.5% by weight of caprolactam;

The obtained melt had a molecular weight of 3,1920, a relative viscosity of 3.8, an oligomer content of 1.5% or less, and a cyclic dimer content of 0.2% or less; and a nylon 6 polymer is obtained after the kinetic strengthening of the polycondensation reaction is completed.

## EXAMPLE 12 MELT DIRECT SPINNING METHOD OF NYLON 6 POLYMER

The nylon 6 polymer of Example 1 is directly spun according to the nylon 6 spinning process after the kinetic strengthening process of the polycondensation reaction, the spinning temperature is 240°C, the first godet speed is 4500 m / min, and the second the godet speed is 5000 m/min, the draw ratio is 1.5 times, the cooling air temperature is 15 °C, the wind speed is 0.5 m/s, and the relative humidity is 90%, and the fully drawn yarn is obtained.

The spinning microporous cross-sectional shape of the above spinning is a triangle;

After the completion of the kinetic strengthening process of the polycondensation reaction, the above-mentioned nylon 6 polymer is added with functional masterbatch or masterbatch in the melt transfer process, and uniformly mixed, and then directly spun according to the nylon 6 spinning process, the amount of addition is 1 wt% of nylon 6 polymer. The matrix of the functional masterbatch or masterbatch is nylon 6. The functional adjuvant contained in the functional masterbatch is an antioxidant 1010 in an amount of 30% by weight of the functional masterbatch. The colorant used in the masterbatch is phthalocyanine red.

After the nylon 6 polymer is finished at the end of the polycondensation reaction kinetic strengthening process, the polymer chips are added on-line during the melt transfer process, and immediately mixed and directly spun according to the nylon 6 spinning process, and the amount of the polymer chips added is 5 wt% of the nylon 6 melt. The polymer slice is polyethylene terephthalate.

## EXAMPLE 13 MELT DIRECT SPINNING METHOD OF NYLON 6 POLYMER

The nylon 6 polymer of Example 2 is directly spun according to the nylon 6 spinning process after the end of the polycondensation reaction kinetic strengthening process, the spinning temperature is 280°C, the first godet speed is 4000 m / min, and the second godet speed is 6000 m/min, the draw ratio is 1.1 times, the cooling air temperature is 25 °C, the wind speed is 1 m/s, and the relative humidity is 60%, and the fully drawn yarn is obtained.

The spinning microporous cross-sectional shape of the above spinning is a cross shape;

After the completion of the kinetic strengthening process of the polycondensation reaction, the above-mentioned nylon 6 polymer is added with functional masterbatch or masterbatch in the melt transfer process, and uniformly mixed, and then directly spun according to the nylon 6 spinning process, the amount of addition is 30% by weight of nylon 6 polymer. The matrix of the functional masterbatch or masterbatch is nylon 6T. The functional adjuvant contained in the functional masterbatch is an antioxidant 168 in an amount of 10% by weight of the functional masterbatch. The colorant used in the masterbatch is phthalocyanine blue.

After the nylon 6 polymer is finished at the end of the polycondensation reaction kinetic strengthening process, the polymer chips are added on-line during the melt transfer process, and immediately mixed and directly spun according to the nylon 6 spinning process, and the amount of the polymer chips added is 50% by weight of the nylon 6 melt. The polymer section is nylon 6.

## EXAMPLE 14 MELT DIRECT SPINNING METHOD OF NYLON 6 POLYMER

The nylon 6 polymer of Example 3 is directly spun according to the nylon 6 spinning process after the end of the polycondensation reaction kinetic strengthening process, the spinning temperature is 260°C, the first godet speed is 4300 m / min, and the second godet speed is 5500 m/min, the draw ratio is 1.3 times, the cooling air temperature is 20°C, the wind speed is 0.8 m/s, and the relative humidity is 70%, and the fully drawn yarn is obtained.

The spinning microporous cross-sectional shape of the above spinning is polygonal;

After the completion of the kinetic strengthening process of the polycondensation reaction, the above-mentioned nylon 6 polymer is added with functional masterbatch or masterbatch in the melt transfer process, and uniformly mixed, and then directly spun according to the nylon 6 spinning process, the amount of addition is 5 wt% of nylon 6 polymer. The matrix of the functional masterbatch or masterbatch is nylon 612 and polyethylene terephthalate. The functional adjuvant contained in the functional masterbatch is an antioxidant 616 in an amount of 15% by weight of the functional masterbatch. The colorant used in the masterbatch is phthalocyanine green.

After the nylon 6 polymer is finished at the end of the polycondensation reaction kinetic strengthening process, the polymer chips are added on-line during the melt transfer process, and immediately mixed and directly

spun according to the nylon 6 spinning process, and the amount of the polymer chips added is 10% by weight of the nylon 6 melt. The polymer section is polyethylene glycol (polyethylene glycol has a molecular weight of 400 and polyethylene glycol end groups are hydroxyl groups).

## EXAMPLE 15 MELT DIRECT SPINNING METHOD OF NYLON 6 POLYMER

Example 15 does not fall within the scope of the claimed invention but may be useful in understanding the invention.

The nylon 6 polymer of Example 4 is directly spun according to the nylon 6 spinning process after the end of the polycondensation reaction kinetic strengthening process, the spinning temperature is 270°C, the first godet speed is 4250 m / min, and the second The godet speed is 5000 m/min, the draw ratio is 1.4 times, the cooling air temperature is 23 °C, the wind speed is 0.8 m/s, and the relative humidity is 80%, and the fully drawn yarn is obtained.

The spinning microporous cross-sectional shape of the above spinning is hollow fiber;

After the completion of the kinetic strengthening process of the polycondensation reaction, the above-mentioned nylon 6 polymer is added with functional masterbatch or masterbatch in the melt transfer process, and uniformly mixed, and then directly spun according to the nylon 6 spinning process, the amount of addition is 10% by weight of nylon 6 polymer. The matrix of the functional masterbatch or masterbatch is nylon 610 and polybutylene terephthalate. The functional adjuvant contained in the functional masterbatch is an anti-UV agent salicylic acid in an amount of 20% by weight of the functional masterbatch. The colorant used in the masterbatch is light fast red.

After the nylon 6 polymer is finished at the end of the polycondensation reaction kinetic strengthening process, the polymer chips are added on-line during the melt transfer process, and immediately mixed and directly spun according to the nylon 6 spinning process, and the amount of the polymer chips added is 15% by weight of the nylon 6 melt. The polymer chips are polybutylene terephthalate and nylon 6T.

## EXAMPLE 16 MELT DIRECT SPINNING METHOD OF NYLON 6 POLYMER

Example 16 does not fall within the scope of the claimed invention but may be useful in understanding the invention.

The nylon 6 polymer of Example 5 is directly spun in accordance with the nylon 6 spinning process after the kinetic strengthening process of the polycondensation reaction, the spinning temperature is 240°C, the spinning speed is 1500 m / min, and the cooling air temperature is 30. °C, wind speed of 0.3 m / s, relative humidity of 60%, to obtain unoriented yarn.

The spinning microporous cross-sectional shape of the above spinning is U-shaped;

After the completion of the kinetic strengthening process of the polycondensation reaction, the above-mentioned nylon 6 polymer is added with functional masterbatch or masterbatch in the melt transfer process, and uniformly mixed, and then directly spun according to the nylon 6 spinning process, the amount of addition is 12% by weight of nylon 6 polymer. The matrix of the functional masterbatch or masterbatch is polytrimethylene terephthalate. The functional auxiliary contained in the functional masterbatch is an anti-UV agent benzophenone-based benzotriazole system in an amount of 25 wt% of the functional masterbatch. The colorant used in the masterbatch is macromolecular red.

After the nylon 6 polymer is finished at the end of the polycondensation reaction kinetic strengthening process, the polymer chips are added on-line during the melt transfer process, and immediately mixed and directly spun according to the nylon 6 spinning process, and the amount of the polymer chips added is 20% by weight of the nylon 6 melt. The polymer chips are nylon 612 and polyethylene glycol (polyethylene glycol having a molecular weight of 10,000 and a modified terminal group being a carboxyl group).

## EXAMPLE 17 MELT DIRECT SPINNING METHOD OF NYLON 6 POLYMER

Example 17 does not fall within the scope of the claimed invention but may be useful in understanding the invention.

The nylon 6 polymer of Example 6 is directly spun according to the nylon 6 spinning process after the kinetic strengthening process of the polycondensation reaction, the spinning temperature is 280°C, the spinning speed is 700 m / min, and the cooling air temperature is 20°C, wind speed 1m / s, relative humidity of 80%, to obtain unoriented yarn.

The spinning microporous cross-sectional shape of the above spinning is T-shaped;

After the completion of the kinetic strengthening process of the polycondensation reaction, the above-mentioned nylon 6 polymer is added with functional masterbatch or masterbatch in the melt transfer process, and uniformly mixed, and then directly spun according to the nylon 6 spinning process, the amount of addition is 1 wt% of nylon 6 polymer. The matrix of the functional masterbatch or masterbatch is nylon 410 and a water soluble polyester. The functional additive contained in the functional masterbatch is an anti-UV agent talc powder in an amount of 30% by weight of the functional masterbatch. The colorant used in the masterbatch is macromolecular yellow.

After the nylon 6 polymer is finished at the end of the polycondensation reaction kinetic strengthening process, the polymer chips are added on-line during the melt transfer process, and immediately mixed and directly spun according to the nylon 6 spinning process, and

the amount of the polymer chips added is 25 wt% of the nylon 6 melt. The polymer slice is polytrimethylene terephthalate.

EXAMPLE 18 MELT DIRECT SPINNING METHOD OF NYLON 6 POLYMER

Example 18 does not fall within the scope of the claimed invention but may be useful in understanding the invention.

The nylon 6 polymer of Example 7 is directly spun according to the nylon 6 spinning process at the end of the kinetic strengthening process of the polycondensation reaction, the spinning temperature is 260°C, the spinning speed is 900 m/min, and the cooling air temperature is 25 °C, wind speed 0.5m / s, relative humidity of 70%, to obtain unoriented yarn.

The spinning microporous cross-sectional shape of the above spinning is Y-shaped;

After the completion of the kinetic strengthening process of the polycondensation reaction, the above-mentioned nylon 6 polymer is added with functional masterbatch or masterbatch in the melt transfer process, and uniformly mixed, and then directly spun according to the nylon 6 spinning process, the amount of addition is 30% by weight of nylon 6 polymer. The matrix of the functional masterbatch or masterbatch is polyethylene glycol (molecular weight 400, polyethylene glycol end groups are hydroxyl groups). The functional additive contained in the functional masterbatch is an anti-UV agent calcium carbonate in an amount of 10% by weight of the functional masterbatch. The colorant used in the masterbatch is permanent yellow.

After the nylon 6 polymer is finished at the end of the polycondensation reaction kinetic strengthening process, the polymer chips are added on-line during the melt transfer process, and immediately mixed and directly spun according to the nylon 6 spinning process, and the amount of the polymer chips added is 30% by weight of the nylon 6 melt. The polymer slice is nylon 612.

EXAMPLE 19 MELT DIRECT SPINNING METHOD OF NYLON 6 POLYMER

Example 19 does not fall within the scope of the claimed invention but may be useful in understanding the invention.

The nylon 6 polymer of Example 8 is directly spun according to the nylon 6 spinning process after the end of the polycondensation reaction kinetic strengthening process, the spinning temperature is 270°C, the spinning speed is 1000 m / min, and the cooling air temperature is 28 °C, wind speed 0.6m / s, relative humidity of 65%, to obtain unoriented yarn.

The spinning microporous cross-sectional shape of the above spinning is a polygon;

After the completion of the kinetic strengthening process of the polycondensation reaction, the above-mentioned nylon 6 polymer is added with functional masterbatch or masterbatch in the melt transfer process, and uniformly mixed, and then directly spun according to the nylon 6 spinning process, the amount of addition is 15% by weight of nylon 6 polymer. The matrix of the functional masterbatch or masterbatch is nylon 212 and polyethylene glycol (molecular weight 20,000, polyethylene glycol end groups are hydroxyl groups). The functional adjuvant contained in the functional masterbatch is an antibacterial agent nano-titanium dioxide in an amount of 10% by weight of the functional masterbatch. The colorant used in the masterbatch is Pigment Red 179.

After the nylon 6 polymer is finished at the end of the polycondensation reaction kinetic strengthening process, the polymer chips are added on-line during the melt transfer process, and immediately mixed and directly spun according to the nylon 6 spinning process, and the amount of the polymer chips added is 35 wt% of the nylon 6 melt. The polymer chip is polyethylene glycol (polyethylene glycol having a molecular weight of 400 modified end group amino group).

EXAMPLE 20 MELT DIRECT SPINNING METHOD OF NYLON 6 POLYMER

Example 20 does not fall within the scope of the claimed invention but may be useful in understanding the invention.

The nylon 6 polymer of Example 9 is directly spun according to the nylon 6 spinning process after the kinetic strengthening process of the polycondensation reaction, the spinning temperature is 280°C, the spinning speed is 4000 m/min, and the cooling air temperature is 15 °C, wind speed of 0.3 m / s, relative humidity of 80%, to obtain pre-oriented yarn.

The spinning microporous cross-sectional shape of the above spinning is in an I-shape;

After the completion of the kinetic strengthening process of the polycondensation reaction, the above-mentioned nylon 6 polymer is added with functional masterbatch or masterbatch in the melt transfer process, and uniformly mixed, and then directly spun according to the nylon 6 spinning process, the amount of addition is 20% by weight of nylon 6 polymer. The matrix of the functional masterbatch or masterbatch is nylon 11. The functional auxiliary contained in the functional masterbatch is zinc oxide, an antibacterial agent, in an amount of 30% by weight of the functional masterbatch. The colorant used in the masterbatch is Pigment Blue 60.

After the nylon 6 polymer is finished at the end of the polycondensation reaction kinetic strengthening process, the polymer chips are added on-line during the melt transfer process, and immediately mixed and directly spun according to the nylon 6 spinning process, and the amount of the polymer chips added is 40% by weight of the nylon 6 melt. The polymer chip is a water-soluble polyester.

EXAMPLE 21 MELT DIRECT SPINNING METHOD OF NYLON 6 POLYMER

Example 21 does not fall within the scope of the claimed invention but may be useful in understanding the invention.

The nylon 6 polymer of Example 10 is directly spun according to the nylon 6 spinning process after the kinetic strengthening process of the polycondensation reaction, the spinning temperature is 240°C, the spinning speed is 4500 m/min, and the cooling air temperature is 25 °C, wind speed 0.6m / s, relative humidity of 60%, to obtain pre-oriented yarn.

The spinning microporous cross-sectional shape of the above spinning is a triangle;

After the completion of the kinetic strengthening process of the polycondensation reaction, the above-mentioned nylon 6 polymer is added with functional masterbatch or masterbatch in the melt transfer process, and uniformly mixed, and then directly spun according to the nylon 6 spinning process, the amount of addition is 30% by weight of nylon 6 polymer. The matrix of the functional masterbatch or masterbatch is branched nylon. The functional additive contained in the functional masterbatch is an antibacterial agent iron oxide in an amount of 15% by weight of the functional masterbatch. The colorant used in the masterbatch is Solvent Violet 59.

After the nylon 6 polymer is finished at the end of the polycondensation reaction kinetic strengthening process, the polymer chips are added on-line during the melt transfer process, and immediately mixed and directly spun according to the nylon 6 spinning process, and the amount of the polymer chips added is 45 wt% of the nylon 6 melt. The polymer section is nylon 1212.

EXAMPLE 22 MELT DIRECT SPINNING METHOD OF NYLON 6 POLYMER

Example 22 does not fall within the scope of the claimed invention but may be useful in understanding the invention.

The nylon 6 polymer of Example 11 is directly spun according to the nylon 6 spinning process after the kinetic strengthening process of the polycondensation reaction, the spinning temperature is 260°C, the spinning speed is 4300 m / min, and the cooling air temperature is 20°C, wind speed of 0.4 m / s, relative humidity of 70%, to obtain pre-oriented yarn.

The spinning microporous cross-sectional shape of the above spinning is a cross shape;

After the completion of the kinetic strengthening process of the polycondensation reaction, the above-mentioned nylon 6 polymer is added with functional masterbatch or masterbatch in the melt transfer process, and uniformly mixed, and then directly spun according to the nylon 6 spinning process, the amount of addition is 1 wt% of nylon 6 polymer. The matrix of the functional masterbatch or masterbatch is polyethylene terephthalate. The functional auxiliary agent contained in the functional masterbatch is a quaternary ammonium salt compound, wherein R1, R2=C8, R1 and R2 are the same; X- is Cl-, and the content is 20% by weight of the functional masterbatch.. The colorant used in the masterbatch is Solvent Red 181.

After the nylon 6 polymer is finished at the end of the polycondensation reaction kinetic strengthening process, the polymer chips are added on-line during the melt transfer process, and immediately mixed and directly spun according to the nylon 6 spinning process, and the amount of the polymer chips added is 50% by weight of the nylon 6 melt. The polymer chips are polytrimethylene terephthalate and a water soluble polyester.

EXAMPLE 23 MELT DIRECT SPINNING METHOD OF NYLON 6 POLYMER

Example 23 does not fall within the scope of the claimed invention but may be useful in understanding the invention.

The nylon 6 polymer of Example 1 is directly spun according to the nylon 6 spinning process after the end of the polycondensation reaction kinetic strengthening process, the spinning temperature is 270°C, the spinning speed is 4400 m / min, and the cooling air temperature is 23 °C, wind speed 0.5m / s, relative humidity of 75%, to obtain pre-oriented yarn.

The spinning microporous cross-sectional shape of the above spinning is polygonal;

After the completion of the kinetic strengthening process of the polycondensation reaction, the above-mentioned nylon 6 polymer is added with functional masterbatch or masterbatch in the melt transfer process, and uniformly mixed, and then directly spun according to the nylon 6 spinning process, the amount of addition is 15% by weight of nylon 6 polymer. The matrix of the functional masterbatch or masterbatch is nylon 1212. The functional auxiliary agent contained in the functional masterbatch is a quaternary ammonium salt compound, wherein R1, R2=C20, R1 and R2 are the same; X- is Br-, and the content is 25 wt% of the functional masterbatch.. The colorant used in the masterbatch is Solvent Blue 132.

After the nylon 6 polymer is finished at the end of the polycondensation reaction kinetic strengthening process, the polymer chips are added on-line during the melt transfer process, and immediately mixed and directly spun according to the nylon 6 spinning process, and the amount of the polymer chips added is 5 wt% of the nylon 6 melt. The polymer slice is polyethylene terephthalate.

EXAMPLE 24 MELT DIRECT SPINNING METHOD OF NYLON 6 POLYMER

The nylon 6 polymer of Example 2 is directly spun according to the nylon 6 spinning process after the kinetic strengthening process of the polycondensation reaction, the spinning temperature is 280°C, the spinning

speed is 4500 m/min, and the cooling air temperature is 15 °C, wind speed 0.5m / s, relative humidity of 90%, to obtain highly oriented filaments.

The spinning microporous cross-sectional shape of the above spinning is hollow fiber;

After the completion of the kinetic strengthening process of the polycondensation reaction, the above-mentioned nylon 6 polymer is added with functional masterbatch or masterbatch in the melt transfer process, and uniformly mixed, and then directly spun according to the nylon 6 spinning process, the amount of addition is 30% by weight of nylon 6 polymer. The matrix of the functional masterbatch or masterbatch is polybutylene terephthalate. The functional auxiliary contained in the functional masterbatch is a flame retardant zinc borate at a content of 10% by weight of the functional masterbatch. The colorant used in the masterbatch is Solvent Green 29.

After the nylon 6 polymer is finished at the end of the polycondensation reaction kinetic strengthening process, the polymer chips are added on-line during the melt transfer process, and immediately mixed and directly spun according to the nylon 6 spinning process, and the amount of the polymer chips added is 10% by weight of the nylon 6 melt. The polymer chip is a water-soluble polyester.

## EXAMPLE 25 MELT DIRECT SPINNING METHOD OF NYLON 6 POLYMER

The nylon 6 polymer of Example 3 is directly spun according to the nylon 6 spinning process after the kinetic strengthening process of the polycondensation reaction, the spinning temperature is 240°C, the spinning speed is 6000 m / min, and the cooling air temperature is 20°C, wind speed of 0.3 m / s, relative humidity of 80%, to obtain highly oriented filaments.

The spinning microporous cross-sectional shape of the above spinning is U-shaped;

After the completion of the kinetic strengthening process of the polycondensation reaction, the above-mentioned nylon 6 polymer is added with functional masterbatch or masterbatch in the melt transfer process, and uniformly mixed, and then directly spun according to the nylon 6 spinning process, the amount of addition is 1 wt% of nylon 6 polymer. The matrix of the functional masterbatch or masterbatch is nylon 12. The functional auxiliary contained in the functional masterbatch is a flame retardant ammonium polyphosphate, and the content is 30% by weight of the functional masterbatch. The colorant used in the masterbatch is Solvent Yellow 135.

After the nylon 6 polymer is finished at the end of the polycondensation reaction kinetic strengthening process, the polymer chips are added on-line during the melt transfer process, and immediately mixed and directly spun according to the nylon 6 spinning process, and the amount of the polymer chips added is 15% by weight of the nylon 6 melt. The polymer chips are nylon 46 and nylon 410.

## EXAMPLE 26 MELT DIRECT SPINNING METHOD OF NYLON 6 POLYMER

The nylon 6 polymer of Example 4 is directly spun according to the nylon 6 spinning process after the kinetic strengthening process of the polycondensation reaction, the spinning temperature is 250°C, the spinning speed is 4700 m / min, and the cooling air temperature is 18 °C, wind speed of 0.4 m / s, relative humidity of 85%, to obtain highly oriented filaments.

The spinning microporous cross-sectional shape of the above spinning is T-shaped;

After the completion of the kinetic strengthening process of the polycondensation reaction, the above-mentioned nylon 6 polymer is added with functional masterbatch or masterbatch in the melt transfer process, and uniformly mixed, and then directly spun according to the nylon 6 spinning process, the amount of addition is 20% by weight of nylon 6 polymer. The matrix of the functional masterbatch or masterbatch is nylon 26. The functional auxiliary contained in the functional masterbatch is a mixture of 1,3,6-tris(4,6-diamino-2-thiotriazine)hexane and cyanuric acid, and the content is functional. 15% by weight of the masterbatch. The colorants used in the masterbatch are Solvent Yellow 135 and Pigment Red 179.

After the nylon 6 polymer is finished at the end of the polycondensation reaction kinetic strengthening process, the polymer chips are added on-line during the melt transfer process, and immediately mixed and directly spun according to the nylon 6 spinning process, and the amount of the polymer chips added is 20% by weight of the nylon 6 melt. The polymer section is nylon nylon 46.

## EXAMPLE 27 MELT DIRECT SPINNING METHOD OF NYLON 6 POLYMER

The nylon 6 polymer of Example 5 is directly spun according to the nylon 6 spinning process after the kinetic strengthening process of the polycondensation reaction, the spinning temperature is 260°C, the spinning speed is 4800 m / min, and the cooling air temperature is 16 °C, wind speed of 0.4 m / s, relative humidity of 88%, to obtain highly oriented filaments.

The spinning microporous cross-sectional shape of the above spinning is Y-shaped;

After the completion of the kinetic strengthening process of the polycondensation reaction, the above-mentioned nylon 6 polymer is added with functional masterbatch or masterbatch in the melt transfer process, and uniformly mixed, and then directly spun according to the nylon 6 spinning process, the amount of addition is 25 wt% of nylon 6 polymer. The matrix of the functional masterbatch or masterbatch is polytrimethylene terephthalate. The functional additive contained in the functional masterbatch is an anion generating material, kiwi, in an amount of 10% by weight of the functional masterbatch. The colorants used in the masterbatch are Solvent Yellow

135 and Solvent Yellow 167.

After the nylon 6 polymer is finished at the end of the polycondensation reaction kinetic strengthening process, the polymer chips are added on-line during the melt transfer process, and immediately mixed and directly spun according to the nylon 6 spinning process, and the amount of the polymer chips added is 25 wt% of the nylon 6 melt. The polymer section is polyethylene glycol (molecular weight 20,000, polyethylene glycol end group is hydroxyl group).

EXAMPLE 28 MELT DIRECT SPINNING METHOD OF NYLON 6 POLYMER

Example 28 does not fall within the scope of the claimed invention but may be useful in understanding the invention.

The nylon 6 polymer of Example 6 is directly spun in accordance with the nylon 6 spinning process to obtain a puffed textured yarn after the completion of the kinetic strengthening process of the polycondensation reaction. The spinning temperature is 280°C, the cooling air temperature is 20°C, and the wind speed is 0.3. m/s, relative humidity is 80%, feed roller temperature is 60°C, stretching roll temperature is 190°C, feed speed is 300 m / min, tensile speed is 1000 m / min, draw ratio is 3.5 times, deformation The hot air temperature is 230°C, the air injection pressure is 490 kPa, the winding speed is 600 m/min, and the cooling air temperature is 25 °C.

The spinning microporous cross-sectional shape of the above spinning is a polygon;
After the completion of the kinetic strengthening process of the polycondensation reaction, the above-mentioned nylon 6 polymer is added with functional masterbatch or masterbatch in the melt transfer process, and uniformly mixed, and then directly spun according to the nylon 6 spinning process, the amount of addition is 30% by weight of nylon 6 polymer. The matrix of the functional masterbatch or masterbatch is polytrimethylene terephthalate and a water soluble polyester. The functional additive contained in the functional masterbatch is a negative ion generating material tourmaline in an amount of 30% by weight of the functional masterbatch. The colorant used in the masterbatch is Solvent Violet 37.

After the nylon 6 polymer is finished at the end of the polycondensation reaction kinetic strengthening process, the polymer chips are added on-line during the melt transfer process, and immediately mixed and directly spun according to the nylon 6 spinning process, and the amount of the polymer chips added is 30% by weight of the nylon 6 melt. The polymer slice is polybutylene terephthalate.

EXAMPLE 29 MELT DIRECT SPINNING METHOD OF NYLON 6 POLYMER

Example 29 does not fall within the scope of the claimed invention but may be useful in understanding the invention.

The nylon 6 polymer of Example 7 is directly spun in accordance with the nylon 6 spinning process to obtain a puffed textured yarn after the completion of the kinetic strengthening process of the polycondensation reaction. The spinning temperature is 240°C, the cooling air temperature is 30°C, and the wind speed is 1 m. / s, relative humidity is 60%, feed roller temperature is 120°C, stretching roller temperature is 100°C, feeding speed is 1000 m / min, stretching speed is 3500 m / min, stretching ratio is 5 times, heat of deformation The air temperature is 190°C, the air injection pressure is 196 kPa, the winding speed is 3000 m/min, and the cooling air temperature is 25 °C.

The spinning microporous cross-sectional shape of the above spinning is in an I-shape;
After the completion of the kinetic strengthening process of the polycondensation reaction, the above-mentioned nylon 6 polymer is added with functional masterbatch or masterbatch in the melt transfer process, and uniformly mixed, and then directly spun according to the nylon 6 spinning process, the amount of addition is 1 wt% of nylon 6 polymer. The matrix of the functional masterbatch or masterbatch is nylon 46. The functional auxiliary agent contained in the functional masterbatch is a fluorescent material (using an alkaline earth metal sulfide or an aluminate as a light-emitting substrate, and a rare earth lanthanide lanthanum, cerium, lanthanum or cerium as an activator). It is 10% by weight of the functional masterbatch. The colorant used in the masterbatch is Solvent Red 143.

After the nylon 6 polymer is finished at the end of the polycondensation reaction kinetic strengthening process, the polymer chips are added on-line during the melt transfer process, and immediately mixed and directly spun according to the nylon 6 spinning process, and the amount of the polymer chips added is 35 wt% of the nylon 6 melt. The polymer chip is a water soluble polyester.

EXAMPLE 30 MELT DIRECT SPINNING METHOD OF NYLON 6 POLYMER

Example 30 does not fall within the scope of the claimed invention but may be useful in understanding the invention.

The nylon 6 polymer of Example 8 is directly spun in accordance with the nylon 6 spinning process to obtain a puffed textured yarn after the completion of the kinetic strengthening process of the polycondensation reaction. The spinning temperature is 260°C, the cooling air temperature is 25 °C, and the wind speed is 0.5. m/s, relative humidity is 70%, feed roller temperature is 80°C, stretching roll temperature is 120°C, feed speed is 500 m / min, tensile speed is 2000 m / min, draw ratio is 4 times, deformation The hot air temperature is 200°C, the air injection pressure is 300 kPa, the winding speed is 1000 m/min, and the cooling air temperature is 25 °C.

The spinning microporous cross-sectional shape of the above spinning is a triangle;
After the completion of the kinetic strengthening process of the polycondensation reaction, the above-mentioned nylon 6 polymer is added with functional masterbatch or masterbatch in the melt transfer process, and uniformly mixed, and then directly spun according to the nylon 6 spinning process, the amount of addition is 10% by weight of nylon 6 polymer. The matrix of the functional masterbatch or masterbatch is nylon 6T. The functional auxiliary contained in the functional masterbatch is an anion generating material opal in an amount of 25 wt% of the functional masterbatch. The colorant used in the masterbatch is Solvent Blue 94.

After the nylon 6 polymer is finished at the end of the polycondensation reaction kinetic strengthening process, the polymer chips are added on-line during the melt transfer process, and immediately mixed and directly spun according to the nylon 6 spinning process, and the amount of the polymer chips added is 40% by weight of the nylon 6 melt. The polymer slice is polytrimethylene terephthalate.

EXAMPLE 31 MELT DIRECT SPINNING METHOD OF NYLON 6 POLYMER

Example 31 does not fall within the scope of the claimed invention but may be useful in understanding the invention.

The nylon 6 polymer of Example 9 is directly spun in accordance with the nylon 6 spinning process to obtain a puffed textured yarn after the completion of the kinetic strengthening process of the polycondensation reaction. The spinning temperature is 270°C, the cooling air temperature is 28 °C, and the wind speed is 0.8. m/s, relative humidity is 75%, feed roller temperature is 100°C, stretching roll temperature is 150°C, feed speed is 800 m / min, tensile speed is 3000 m / min, draw ratio is 4.5 times, deformation The hot air temperature is 210°C, the air injection pressure is 350 kPa, the winding speed is 2000 m/min, and the cooling air temperature is 25 °C.

The spinning microporous cross-sectional shape of the above spinning is a cross shape;
After the completion of the kinetic strengthening process of the polycondensation reaction, the above-mentioned nylon 6 polymer is added with functional masterbatch or masterbatch in the melt transfer process, and uniformly mixed, and then directly spun according to the nylon 6 spinning process, the amount of addition is 20% by weight of nylon 6 polymer. The matrix of the functional masterbatch or masterbatch is nylon 212. The functional auxiliary contained in the functional masterbatch is an anion generating material genius stone in an amount of 20% by weight of the functional masterbatch. The colorant used in the masterbatch is carbon black.

After the nylon 6 polymer is finished at the end of the polycondensation reaction kinetic strengthening process, the polymer chips are added on-line during the melt transfer process, and immediately mixed and directly spun according to the nylon 6 spinning process, and the amount of the polymer chips added is 45 wt% of the nylon 6 melt. The polymer slice is polybutylene terephthalate.

EXAMPLE 32 MELT DIRECT SPINNING METHOD OF NYLON 6 POLYMER

The nylon 6 polymer described in Example 10 is directly applied to the composite spinning after the end of the polycondensation reaction kinetic strengthening process, and the composite spinning is a side-by-side type, and the other component of the composite spinning except nylon 6 is Nylon 6T, the mass ratio of the nylon 6 polymer to the other component is 3:7.

The spinning microporous cross-sectional shape of the above spinning is polygonal;
After the completion of the kinetic strengthening process of the polycondensation reaction, the above-mentioned nylon 6 polymer is added with functional masterbatch or masterbatch in the melt transfer process, and uniformly mixed, and then directly spun according to the nylon 6 spinning process, the amount of addition is 1 wt% of nylon 6 polymer. The matrix of the functional masterbatch or masterbatch is polytrimethylene terephthalate. The functional auxiliary contained in the functional masterbatch is a flame retardant bis(hexachlorocyclopentadienyl)cyclooctane in an amount of 20% by weight of the functional masterbatch. The colorant used in the masterbatch is Pigment Yellow 184.

After the nylon 6 polymer is finished at the end of the polycondensation reaction kinetic strengthening process, the polymer chips are added on-line during the melt transfer process, and immediately mixed and directly spun according to the nylon 6 spinning process, and the amount of the polymer chips added is 50% by weight of the nylon 6 melt. The polymer slice is polybutylene terephthalate.

EXAMPLE 33 MELT DIRECT SPINNING METHOD OF NYLON 6 POLYMER

The nylon 6 polymer of Example 11 is directly applied to the composite spinning after the end of the polycondensation reaction kinetic strengthening process, and the composite spinning is an island-in-the-sea type; the other component of the composite spinning except nylon 6 is Nylon 610, the mass ratio of the nylon 6 polymer to the other component is 7:3.

The spinning microporous cross-sectional shape of the above spinning is hollow fiber;
After the completion of the kinetic strengthening process of the polycondensation reaction, the above-mentioned nylon 6 polymer is added with functional masterbatch or masterbatch in the melt transfer process, and uniformly mixed, and then directly spun according to the nylon 6 spinning process, the amount of addition is 30% by

weight of nylon 6 polymer. The matrix of the functional masterbatch or masterbatch is nylon 610. The functional auxiliary contained in the functional masterbatch is the flame retardant decabromodiphenyl ether in an amount of 20% by weight of the functional masterbatch. The colorant used in the masterbatch is iron oxide red.

After the nylon 6 polymer is finished at the end of the polycondensation reaction kinetic strengthening process, the polymer chips are added on-line during the melt transfer process, and immediately mixed and directly spun according to the nylon 6 spinning process, and the amount of the polymer chips added is 50% by weight of the nylon 6 melt. The polymer chip is a water soluble polyester.

## EXAMPLE 34 NYLON 6 POLYMER SPUN INTO FIBER WOVEN FABRIC

The nylon 6 fiber obtained by spinning the nylon polymer described in Example 1 is then woven into a fabric, which is plain, and then dyed to obtain a cloth of different specifications.

The dyeing production process of the fabric is: pre-treatment desizing-hot water cleaning fabric-heating dyeing-fixing color-cooling cleaning-fabric machine waterproof stereotype-finished product inspection-finished product rolling.

The pretreatment desizing temperature is 80°C, the desizing time is 6 h, and the desizing aid formula is: soda ash 10 g / L, deoiling spirit 15 g / L.

The temperature rising dyeing process is a temperature of 40°C at the initial dyeing temperature, a temperature increase of 1 °C / min, and the temperature is raised to 90°C for another 40 min; the concentration of the dye is 2% (omf), and the bath ratio is 1:10.

The fixing process is a temperature of 90°C, a fixing time of 60 min, a fixing agent concentration of 2% (omf), and a bath ratio of 1:10.

In the process of dyeing and fixing, an auxiliary agent is added, and the auxiliary agent is added in an amount of 5 g/L, and the auxiliary agent includes a water softener NORM02, a leveling agent ACID03, and a retarding agent ammonium sulfate.

## EXAMPLE 34 NYLON 6 POLYMER SPUN INTO FIBER WOVEN FABRIC

The nylon 6 fiber obtained by spinning the nylon polymer described in Example 2 is then knitted to form a fabric which is twill and then dyed to obtain a cloth of different specifications.

The dyeing production process of the fabric is: pre-treatment desizing-hot water cleaning fabric-heating dyeing-fixing color-cooling cleaning-fabric machine waterproof stereotype-finished product inspection-finished product rolling.

The pretreatment desizing temperature is 60°C, the desizing time is 12 h, and the desizing aid formula is: soda ash 20 g / L, deoiling spirit 10 g / L.

The temperature rising dyeing process is that the initial dyeing temperature is 30°C, the temperature is raised at a rate of 3 °C / min, the temperature is raised to 95 °C and then kept for 40 min; the dye concentration is 0.5% (omf), and the bath ratio is 1:20.

The fixing process is a temperature of 95 °C, a fixing time of 20 min, a fixing agent concentration of 0.5% (omf), and a bath ratio of 1:20.

In the dyeing and fixing process, an auxiliary agent is added, and the auxiliary agent is added in an amount of 10 g/L, and the auxiliary agent includes a water softener NORM02, a leveling agent ACID 16, and a retarding agent ammonium sulfate.

## EXAMPLE 36 NYLON 6 POLYMER SPUN INTO FIBER WOVEN FABRIC

The nylon 6 fiber obtained by spinning the nylon polymer described in Example 3 is then woven into a fabric which is satin-printed and then dyed to obtain a cloth of different specifications.

The dyeing production process of the fabric is: pre-treatment desizing-hot water cleaning fabric-heating dyeing-fixing color-cooling cleaning-fabric machine waterproof stereotype-finished product inspection-finished product rolling.

The pretreatment desizing temperature is 70°C, the desizing time is 8 h, and the desizing aid formula is: soda ash 15 g / L, deoiling spirit 12 g / L.

The temperature rising dyeing process is that the initial dyeing temperature is 35 °C, the temperature is raised at a rate of 2 °C / min, the temperature is raised to 92 °C and then kept for 40 min; the concentration of the dye is 0.8% (omf), and the bath ratio is 1:15.

The fixing process is a temperature of 92 °C, a fixing time of 30 min, a fixing agent concentration of 0.8% (omf), and a bath ratio of 1:15.

In the dyeing and fixing process, an auxiliary agent is added, and the auxiliary agent is added in an amount of 7 g/L, and the auxiliary agent includes a water softener NORM02, a leveling agent ACID03, and a retarding agent ammonium sulfate.

## EXAMPLE 37 NYLON 6 POLYMER SPUN INTO FIBER WOVEN FABRIC

The nylon 6 fiber obtained by spinning the nylon polymer described in Example 4 is then knitted to form a fabric which is plain and then dyed to obtain a cloth of different specifications.

The dyeing production process of the fabric is: pre-treatment desizing-hot water cleaning fabric-heating dyeing-fixing color-cooling cleaning-fabric machine waterproof stereotype-finished product inspection-finished product rolling.

The pretreatment desizing temperature is 750°C, the desizing time is 10 h, and the desizing assistant formula is: soda ash 18 g / L, deoiling spirit 13 g / L.

The temperature rising dyeing process has a dyeing temperature of 38 °C, a temperature increase of 2 °C / min, a temperature increase of 93 °C and a temperature of 40 min; a dye concentration of 1.5% (omf), a bath ratio of 1:18.

The fixing process is a temperature of 93 °C, a fixing time of 40 min, a fixing agent concentration of 1.5% (omf), and a bath ratio of 1:18.

In the process of dyeing and fixing, an auxiliary agent is added, and the auxiliary agent is added in an amount of 5-10 g/L, and the auxiliary agent includes a softener NORM02, a leveling agent ACID 16, and a retarding agent ammonium sulfate.

EXAMPLE 38 APPARATUS FOR NYLON 6 POLYMERIZATION

As shown in FIG. 2, a device for a nylon 6 polymerization method, the silo 1 functions to store caprolactam, which is connected to a raw material heating tank 3 through a pipe, and the raw material heating tank 3 functions to melt caprolactam; 4 is connected to the raw material heating tank 3 through a pipe, and the function of the pressurized open-loop kettle 4 is to promote the hydrolysis and opening of the caprolactam by means of pressurization to obtain a prepolymer having a low cyclic oligomer content; the polycondensation kettle 5 passes through the pipeline Connected to the pressurized open-loop kettle 4, the function of the polycondensation tank 5 is to pre-condense the product of the pressurized open-loop kettle 4 to a molecular weight near the molecular chain entanglement point, and to remove a large amount of unreacted monomers. The melt viscosity is low, so the conditions for polycondensation are not high; the liquid phase thickening kettle 6 is connected to the polycondensation vessel 5 through a pipe, and the liquid phase thickening kettle 6 functions to pass the product of the polycondensation kettle 5 through high vacuum polycondensation reaction power. Learn to strengthen to the target molecular weight, and quickly remove unreacted monomer and water, at this time the melt viscosity is higher, so the conditions for polycondensation are high; in the polycondensation kettle 5, the liquid phase thickening kettle 6 and the buffer tank 7 connected by pipes, buffer tank 7 The function is to collect the small molecules extracted from the polycondensation kettle 5 and the liquid phase thickening kettle 6, and transport them to the concentration tank 8; the concentration tank 8 and the buffer tank 7 are connected by a pipe, and the function of the concentration tank 8 is to buffer The monomer conveyed from the tank 7 is concentrated and re-delivered into the raw material heating tank 3 to continue to participate in the reaction. It is sent to a concentrator 8 for concentration and property reuse; the resulting melt is directly conveyed to a spinning pack for spinning, followed by weaving, dyeing, and obtaining a final product.

The caprolactam passes through the silo 1 to the raw material heating tank 3, and the caprolactam is melted and then sent to the pressurized open-loop kettle 4. After the ring-opening, the prepolymer obtained is sent to the polycondensation vessel 5 for vacuum polycondensation, and the obtained polymer is transported. The liquid phase thickening kettle 6 is subjected to high vacuum polycondensation, and the obtained melt is directly conveyed to a spinning pack for spinning, followed by weaving and dyeing to obtain a final product. The caprolactam extracted in 5, 6 will be sent to a concentrator 8 for concentration and property reuse.

EXAMPLE 39 NYLON 6 POLYMERIZATION METHOD

A nylon 6 polymerization method is prepared by a stepwise polymerization method, and the specific preparation method is as follows:

The first stage is a ring-opening reaction stage: prepolymerization of caprolactam, water and catalyst at a temperature of 200°C and a pressure of 3 MPa, the ring-opening reaction time is 6 h; wherein the water content is 15 wt% of caprolactam, the catalyst The content is 10% by weight of caprolactam, the catalyst is HNO3, NH3 and [Al(H2O)6] (HNO3, NH3 and [Al(H2O)6] mass ratio is 2:1:1); simultaneously adding lactone homopolymer ( m=1, molecular weight 1000), the amount added is 10% by weight of caprolactam;

The obtained product has a number average molecular weight of 2000, an oligomer content of 30%, a cyclic dimer content of 0.1% or less, and a melt viscosity of 5 Pa·s;

The second stage is the pre-polycondensation stage: the product obtained by the ring-opening reaction is subjected to a polycondensation reaction under the conditions of a pressure of 150 Pa and a temperature of 180°C, and the pre-polycondensation reaction time is 3 hours; and the molecular weight stabilizer diamine H2N(CH2)dNH2 is simultaneously added. (wherein d=1) and the aromatic dibasic acid terephthalic acid (the mass ratio of the diamine to the terephthalic acid is 1:1), the stabilizer is added in an amount of 8 wt% of the caprolactam; The amount added is 8 wt% of caprolactam;

The obtained prepolymer has a melt molecular weight of 4000, an oligomer content of 2%, wherein the cyclic dimer content is 0.1%, and the melt viscosity is 800 Pa·s;

The third stage is the liquid phase thickening stage: the liquid phase thickening kettle is used to polymerize under the pressure of 80Pa, and the polymerization temperature is gradually increased from 180°C to 280°C (divided into 10 stages, respectively 180°C -190°C-200°C-210°C-220°C-230°C-240°C-250°C-260°C-270°C-280°C), the liquid phase viscosity-increasing reaction time is 80min; at the same time

adding the chain extender phosphate ester, the amount of chain extender added Is 0.5 wt% of caprolactam;

The obtained melt had a molecular weight of 15,960, a relative viscosity of 2.5, an oligomer content of 1.5% or less, and a cyclic dimer content of 0.2% or less. After the liquid phase thickening is completed, a nylon 6 polymer is obtained.

EXAMPLE 40 MELT DIRECT SPINNING METHOD OF NYLON 6 POLYMER

The nylon 6 polymer of Example 39 is directly spun according to the nylon 6 spinning process immediately after the end of the liquid phase thickening reaction, the spinning temperature is 250°C, the spinning speed is 4500 m / min, and the cooling air temperature is 25 °C. The wind speed is 0.6 m/s and the relative humidity is 70%, and a pre-oriented yarn is obtained.

The spinning microporous cross-sectional shape of the above spinning is U-shaped;

After the liquid phase thickening reaction is completed, the above-mentioned nylon 6 polymer is added with functional masterbatch or masterbatch in the melt transfer process, and uniformly mixed, and then directly spun according to the nylon 6 spinning process, and the amount of the nylon is added. 6 wt% of the polymer. The matrix of the functional masterbatch or masterbatch is branched nylon. The functional auxiliary contained in the functional masterbatch is carbon nanotubes in an amount of 15% by weight of the functional masterbatch. The colorant used in the masterbatch is Pigment Brown 41.

After the liquid phase thickening reaction of the above nylon 6 polymer is completed, the polymer chips are added on-line during the melt transportation, and immediately mixed and directly spun according to the nylon 6 spinning process, and the polymer chip is added in a nylon amount. 65% by weight of the melt. The polymer section is nylon 1212.

EXAMPLE 41 NYLON 6 POLYMERIZATION METHOD

A nylon 6 polymerization method is prepared by a stepwise polymerization method, and the specific preparation method is as follows:

The first stage is a ring-opening reaction stage: prepolymerization of caprolactam, water and catalyst at a temperature of 210°C and a pressure of 2 MPa, the ring-opening reaction time is 6 h; wherein the water content is 15 wt% of caprolactam, the catalyst The content is 10wt% of caprolactam, the catalyst is HNO3, NH3 and [Al(H2O)6] (HNO3, NH3 and [Al(H2O)6] mass ratio is 1:1:2); simultaneously adding lactone homopolymer ( m=1, molecular weight 1000), the amount added is 10% by weight of caprolactam;

The obtained product has a number average molecular weight of 2000, an oligomer content of 30%, a cyclic dimer content of 0.1% or less, and a melt viscosity of 5 Pa·s;

The second stage is the pre-polycondensation stage: the product obtained by the ring-opening reaction is subjected to a polycondensation reaction under the conditions of a pressure of 100 Pa and a temperature of 190°C, and the pre-polycondensation reaction time is 3 hours; at the same time, the molecular weight stabilizer diamine o-phenylenediamine is added. The aromatic dibasic acid isophthalic acid (the mass ratio of o-phenylenediamine to isophthalic acid is 1:2), the stabilizer is added in an amount of 8 wt% of caprolactam, and the graphene is added in an amount of 6 wt% of caprolactam. ;

The obtained prepolymer has a melt molecular weight of 4000, an oligomer content of 2%, wherein the cyclic dimer content is 0.1%, and the melt viscosity is 800 Pa·s;

The third stage is the liquid phase thickening stage: the liquid phase thickening kettle is used to polymerize under the pressure of 80Pa, and the polymerization temperature is gradually increased from 180°C to 280°C (divided into 10 stages, respectively 180°C -190°C-200°C-210°C-220°C-230°C-240°C-250°-C-260°C-270°C-280°C), the liquid phase viscosity-increasing reaction time is 80min; at the same time adding the chain extender phosphate ester, the amount of chain extender added Is 0.5 wt% of caprolactam;

The obtained melt had a molecular weight of 15,960, a relative viscosity of 2.5, an oligomer content of 1.5% or less, and a cyclic dimer content of 0.2% or less. After the liquid phase thickening is completed, a nylon 6 polymer is obtained.

EXAMPLE 42 MELT DIRECT SPINNING METHOD OF NYLON 6 POLYMER

Example 42 does not fall within the scope of the claimed invention but may be useful in understanding the invention.

In Example 41 the nylon 6 polymer is directly spun in a nylon 6 spinning process immediately after the liquid phase thickening reaction is completed, the spinning temperature is 270°C, the spinning speed is 4500 m/min, and the cooling air temperature is 25 °C. The wind speed is 0.6 m/s and the relative humidity is 75%, and a pre-oriented yarn is obtained.

The spinning microporous cross-sectional shape of the above spinning is U-shaped;

After the liquid phase thickening reaction is completed, the above-mentioned nylon 6 polymer is added with functional masterbatch or masterbatch in the melt transfer process, and uniformly mixed, and then directly spun according to the nylon 6 spinning process, and the amount of the nylon is added. 6 wt% of the polymer.

The matrix of the functional masterbatch or masterbatch is branched nylon. The functional auxiliary contained in the functional masterbatch is graphene in an amount of 15% by weight of the functional masterbatch. The colorant used in the masterbatch is Pigment Yellow 184.

After the liquid phase thickening reaction of the above nylon 6 polymer is completed, the polymer chips are added on-line during the melt transportation, and immediately mixed and directly spun according to the nylon 6 spinning process, and the polymer chip is added in a nylon amount. 65% by weight of the melt. The polymer section is nylon 1212.

EXAMPLE 43 NYLON 6 POLYMERIZATION METHOD

A nylon 6 polymerization method is prepared by a stepwise polymerization method, and the specific preparation method is as follows:

The first stage is a ring-opening reaction stage: pre-polymerization of caprolactam, water and catalyst at a temperature of 260°C and a pressure of 2 MPa, the ring-opening reaction time is 8 h; wherein the water content is 15 wt% of caprolactam, the catalyst The content is 10wt% of caprolactam, the catalyst is HCl; at the same time, the molecular weight stabilizer H(CH2)aCOOH is added, wherein a=1, the added amount is 0.01wt% of caprolactam; and the lactam is added, the added amount is 49wt% of caprolactam; At the same time, the antioxidant 1010 is added in an amount of 0.01 wt% of caprolactam; and the chain extender dioxirane is added, wherein the formula is R=C1, and the chain extender is added in an amount of 0.02 wt% of caprolactam;

The obtained product has a number average molecular weight of 1900, an oligomer content of 25%, a cyclic dimer content of 0.1% or less, and a melt viscosity of 10 Pa·s;

The second stage is a pre-polycondensation stage: the product obtained by the ring-opening reaction is subjected to a polycondensation reaction under the conditions of a pressure of 160 Pa and a temperature of 200°C, and the pre-polycondensation reaction time is 2.5 h;

The obtained prepolymer has a melt molecular weight of 5,200, an oligomer content of 7%, wherein the cyclic dimer content is 0.1%, and the melt viscosity is 90 Pa·s;

The third stage is the liquid phase thickening stage: the polymerization is carried out under the pressure of 80Pa, and the polymerization temperature is gradually increased from 210°C to 280°C (divided into 7 stages, respectively 210°C-220°C-230°C-240°C-250°C - 260°C-270°C-280°C), liquid phase viscosity increasing reaction time is 40 min;

The obtained melt had a molecular weight of 29640, a relative viscosity of 3.6, an oligomer content of 1.5% or less, and a cyclic dimer content of 0.2% or less; and a nylon 6 polymer is obtained after completion of liquid phase thickening.

EXAMPLE 44 MELT DIRECT SPINNING METHOD OF NYLON 6 POLYMER

Example 44 does not fall within the scope of the claimed invention but may be useful in understanding the invention.

The nylon 6 polymer of Example 43 is directly spun according to the nylon 6 spinning process immediately after the end of the liquid phase thickening reaction, the spinning temperature is 280°C, the spinning speed is 700 m / min, and the cooling air temperature is 20°C. The wind speed is 1 m/s, and the relative humidity is 80%, and unoriented yarn is obtained.

The spinning microporous cross-sectional shape of the above spinning is T-shaped;
After the liquid phase thickening reaction is completed, the above-mentioned nylon 6 polymer is added with functional masterbatch or masterbatch in the melt transfer process, and uniformly mixed, and then directly spun according to the nylon 6 spinning process, and the amount of the nylon is added. 6 wt% of the polymer. The matrix of the functional masterbatch or masterbatch is nylon 410 and a water soluble polyester. The functional additive contained in the functional masterbatch is an anti-UV agent talc powder in an amount of 30% by weight of the functional masterbatch. The colorant used in the masterbatch is permanent violet.

After the liquid phase thickening reaction of the above nylon 6 polymer is completed, the polymer chips are added on-line during the melt transportation, and immediately mixed and directly spun according to the nylon 6 spinning process, and the polymer chip is added in a nylon amount. 65% by weight of the melt. The polymer slice is polytrimethylene terephthalate.

EXAMPLE 45 NYLON 6 POLYMERIZATION METHOD

A nylon 6 polymerization method is prepared by a stepwise polymerization method, and the specific preparation method is as follows:

The first stage is a ring-opening reaction stage: pre-polymerization of caprolactam, water and catalyst at a temperature of 210°C and a pressure of 1 MPa, the ring-opening reaction time is 8 h; wherein the water content is 15 wt% of caprolactam, the catalyst The content is 10% by weight of caprolactam, the catalyst is H3PO4; and the lactone is added at the same time, the added amount is 40% by weight of caprolactam;

The obtained product has a number average molecular weight of 1600, an oligomer content of 15%, a cyclic dimer content of 0.1% or less, and a melt viscosity of 30 Pa·s;

The second stage is a pre-polycondensation stage:

the product obtained by the ring-opening reaction is subjected to a polycondensation reaction at a pressure of 150 Pa and a temperature of 210°C, and the pre-polycondensation reaction time is 1 h; and the molecular weight stabilizer H(CH 2 ) bNH 2 is added simultaneously, wherein b =1, the addition amount is 2wt% of caprolactam; at the same time, adding anti-UV agent salicylic acid, adding 10wt% of caprolactam; adding chain extender dioxirane, molecular formula, wherein R=C8, chain extender The amount added is 1.2 wt% of caprolactam;

The obtained prepolymer has a melt molecular weight of 4500 and an oligomer content of 7%, wherein the cyclic dimer content is 0.1%, and the melt viscosity is 90 Pa·s;

The third stage is the liquid phase thickening stage: the polymerization is carried out under the pressure of 80Pa, and the polymerization temperature is gradually increased from 210°C to 280°C (divided into 7 stages, respectively 210°C-220°C-230°C-240°C-250°C - 260°C-270°C-280°C), liquid phase viscosity increasing reaction time is 50 min;

The obtained melt had a molecular weight of 33,060, a relative viscosity of 3.9, an oligomer content of 1.5% or less, and a cyclic dimer content of 0.2% or less. After the liquid phase thickening is completed, a nylon 6 polymer is obtained.

EXAMPLE 46 MELT DIRECT SPINNING METHOD OF NYLON 6 POLYMER

Example 46 does not fall within the scope of the claimed invention but may be useful in understanding the invention.

The nylon 6 polymer of Example 45 is directly spun according to the nylon 6 spinning process immediately after the end of the liquid phase thickening reaction, the spinning temperature is 260°C, the spinning speed is 900 m / min, and the cooling air temperature is 25 °C. The wind speed is 0.5 m/s and the relative humidity is 70%, and unoriented yarn is obtained.

The spinning microporous cross-sectional shape of the above spinning is Y-shaped;

After the liquid phase thickening reaction is completed, the above-mentioned nylon 6 polymer is added with functional masterbatch or masterbatch in the melt transfer process, and uniformly mixed, and then directly spun according to the nylon 6 spinning process, and the amount of the nylon is added. 6 wt% of the polymer. The matrix of the functional masterbatch or masterbatch is polyethylene glycol (molecular weight 400, polyethylene glycol end groups are hydroxyl groups). The functional additive contained in the functional masterbatch is an anti-UV agent calcium carbonate in an amount of 10% by weight of the functional masterbatch. The colorants used in the masterbatch are azo red and cadmium red, and the mass ratio of azo red and cadmium red is 1:1.

After the liquid phase thickening reaction of the above nylon 6 polymer is completed, the polymer chips are added on-line during the melt transportation, and immediately mixed and directly spun according to the nylon 6 spinning process, and the polymer chip is added in a nylon amount. 6 30% by weight of the melt. The polymer slice is nylon 612.

EXAMPLE 47 NYLON 6 POLYMERIZATION METHOD

A nylon 6 polymerization method is prepared by a stepwise polymerization method, and the specific preparation method is as follows:

The first stage is a ring-opening reaction stage: prepolymerization of caprolactam, water and catalyst at a temperature of 150°C and a pressure of 5 MPa, the ring-opening reaction time is 10 h; wherein the water content is 15 wt% of caprolactam, the catalyst The content is 10% by weight of caprolactam, and the catalyst is H2SO4;

The obtained product has a number average molecular weight of 2000, an oligomer content of 10%, a cyclic dimer content of 0.1% or less, and a melt viscosity of 10 Pa·s;

The second stage is the pre-polycondensation stage: the product obtained by the ring-opening reaction is subjected to a polycondensation reaction under the conditions of a pressure of 150 Pa and a temperature of 210°C, and the pre-polycondensation reaction time is 3 h; at the same time, a lactam homopolymer (n=1, molecular weight) is added. 2000), the amount added is 30% by weight of caprolactam; at the same time the chain extender bisoxazolone is added, the chain extender is added in an amount of 0.1% by weight of caprolactam;

The obtained prepolymer has a melt molecular weight of 5,700, an oligomer content of 2%, wherein the cyclic dimer content is 0.1%, and the melt viscosity is 100 Pa·s;

The third stage is the liquid phase thickening stage: the polymerization is carried out under the pressure of 80Pa, and the polymerization temperature is gradually increased from 210°C to 280°C (divided into 7 stages, respectively 210°C-220°C-230°C-240°C-250°C - 260°C-270°C-280°C), liquid phase viscosity-increasing reaction time is 60 min; at the same time adding the molecular weight stabilizer dibasic acid HOOC (CH 2 ) cCOOH, where c = 1, the amount of addition is 10 wt% of caprolactam; The formula is a quaternary ammonium salt compound, wherein R1, R2=C8, R1 and R2 are the same, X- is Cl-, and the added amount is 2% by weight of caprolactam;

The obtained melt had a molecular weight of 45,600, a relative viscosity of 5.0, an oligomer content of 1.5% or less, and a cyclic dimer content of 0.2% or less. After the liquid phase thickening is completed, a

nylon 6 polymer is obtained.

EXAMPLE 48 MELT DIRECT SPINNING METHOD OF NYLON 6 POLYMER

Example 48 does not fall within the scope of the claimed invention but may be useful in understanding the invention.

The nylon 6 polymer of Example 47 is directly spun according to the nylon 6 spinning process immediately after the end of the liquid phase thickening reaction, the spinning temperature is 270°C, the spinning speed is 1000 m / min, and the cooling air temperature is 28 °C. The wind speed is 0.6 m/s and the relative humidity is 65%, and unoriented yarn is obtained.

The spinning microporous cross-sectional shape of the above spinning is a polygon;

After the liquid phase thickening reaction is completed, the above-mentioned nylon 6 polymer is added with functional masterbatch or masterbatch in the melt transfer process, and uniformly mixed, and then directly spun according to the nylon 6 spinning process, and the amount of the nylon is added. 6 wt% of the polymer. The matrix of the functional masterbatch or masterbatch is nylon 212 and polyethylene glycol (molecular weight 20,000, polyethylene glycol end groups are hydroxyl groups). The functional adjuvant contained in the functional masterbatch is an antibacterial agent nano-titanium dioxide in an amount of 10% by weight of the functional masterbatch. The colorants used in the masterbatch are cadmium yellow and titanium white powder, and the mass ratio of cadmium yellow and titanium white powder is 2:1.

After the liquid phase thickening reaction of the above nylon 6 polymer is completed, the polymer chips are added on-line during the melt transportation, and immediately mixed and directly spun according to the nylon 6 spinning process, and the polymer chip is added in a nylon amount. 6 35 wt% of the melt. The polymer chip is polyethylene glycol (molecular weight of 400, modified amino group of terminal amino group).

EXAMPLE 49 NYLON 6 POLYMERIZATION METHOD

A nylon 6 polymerization method is prepared by a stepwise polymerization method, and the specific preparation method is as follows:

The first stage is a ring-opening reaction stage: prepolymerization of caprolactam, water and catalyst at a temperature of 210°C and a pressure of 2 MPa, the ring-opening reaction time is 6 h; wherein the water content is 15 wt% of caprolactam, the catalyst The content is 10wt% of caprolactam, the catalyst is HNO3, NH3 and [Al(H2O)6] (HNO3, NH3 and [Al(H2O)6] mass ratio 1:2:1); simultaneously adding lactone homopolymer ( m=1, molecular weight 1000), the amount added is 10% by weight of caprolactam;

The obtained product has a number average molecular weight of 2000, an oligomer content of 30%, a cyclic dimer content of 0.1% or less, and a melt viscosity of 5 Pa·s;

The second stage is a pre-polycondensation stage: the product obtained by the ring-opening reaction is subjected to a polycondensation reaction under the conditions of a pressure of 150 Pa and a temperature of 180°C, and the pre-polycondensation reaction time is 3 hours; and the molecular weight stabilizer diamine m-phenylenediamine and the molecular weight stabilizer are simultaneously added. The aromatic dibasic acid naphthalene dicarboxylic acid (the mass ratio of the diamine to naphthalenedicarboxylic acid is 1:2), the stabilizer is added in an amount of 8 wt% of the caprolactam; and the anion generating material is added to the kiwi, and the amount of the caprolactam is 8 wt. %;

The obtained prepolymer has a melt molecular weight of 4000, an oligomer content of 2%, wherein the cyclic dimer content is 0.1%, and the melt viscosity is 800 Pa·s;

The third stage is the liquid phase thickening stage: the liquid phase thickening kettle is used to polymerize under the pressure of 80Pa, and the polymerization temperature is gradually increased from 180°C to 280°C (divided into 10 stages, respectively 180°C -190°C-200°C-210°C-220°C-230°C-240°C-250°C-260°C-270°C-280°C), the liquid phase viscosity-increasing reaction time is 80min; at the same time adding the chain extender phosphate ester, the amount of chain extender added Is 0.5 wt% of caprolactam;

The obtained melt had a molecular weight of 15,960, a relative viscosity of 2.5, an oligomer content of 1.5% or less, and a cyclic dimer content of 0.2% or less. After the liquid phase thickening is completed, a nylon 6 polymer is obtained.

EXAMPLE 50 MELT DIRECT SPINNING METHOD OF NYLON 6 POLYMER

Example 50 does not fall within the scope of the claimed invention but may be useful in understanding the invention.

The nylon 6 polymer of Example 49 is directly spun according to the nylon 6 spinning process immediately after the end of the liquid phase thickening reaction, the spinning temperature is 240°C, the spinning speed is 4500 m / min, and the cooling air temperature is 25 °C. The wind speed is 0.6 m/s and the relative humidity is 60% to obtain a pre-oriented yarn.

The spinning microporous cross-sectional shape of the above spinning is a triangle;

After the liquid phase thickening reaction is completed, the above-mentioned nylon 6 polymer is added with functional masterbatch or masterbatch in the melt transfer process, and uniformly mixed, and then directly spun according to the nylon 6 spinning process, and the amount of the nylon is added. 6 wt% of the polymer. The matrix of the functional masterbatch or masterbatch is branched nylon. The functional additive contained in the functional masterbatch is an antibacterial agent iron oxide in an amount of 15% by weight of the functional masterbatch. The colorant used in the masterbatch is iron oxide yellow, pigment green 36, pigment yellow 214, and the mass ratio of iron oxide yellow, pigment green 36, and pigment yellow 214 is 2:1:1.

After the liquid phase thickening reaction of the above nylon 6 polymer is completed, the polymer chips are added on-line during the melt transportation, and immediately mixed and directly spun according to the nylon 6 spinning process, and the polymer chip is added in a nylon amount. 65% by weight of the melt. The polymer section is nylon 1212.

EXAMPLE 51 NYLON 6 POLYMERIZATION METHOD

A nylon 6 polymerization method is prepared by a stepwise polymerization method, and the specific preparation method is as follows:

The first stage is a ring-opening reaction stage: prepolymerization is carried out by mixing caprolactam, water and a catalyst at a temperature of 150°C and a pressure of 0.8 MPa, and the ring-opening reaction time is 6 h; wherein the water content is 15 wt% of caprolactam, The catalyst content is 10% by weight of caprolactam, the catalyst is $HNO3$, $NH3$ and $[Al(H2O)6]$ ($HNO3$, $NH3$ and $[Al(H2O)6]$ mass ratio is 1:1:2); simultaneously adding lactone homopolymer (m=1, molecular weight 1000), the amount added is 10% by weight of caprolactam;

The obtained product has a number average molecular weight of 2000, an oligomer content of 30%, a cyclic dimer content of 0.1% or less, and a melt viscosity of 5 Pa·s;

The second stage is the pre-polycondensation stage: the product obtained by the ring-opening reaction is subjected to a polycondensation reaction under the conditions of a pressure of 150 Pa and a temperature of 180°C, and the pre-polycondensation reaction time is 3 hours; and the molecular weight stabilizer diamine $H2N(CH2)dNH2$ is simultaneously added. (where d=10) and aromatic dibasic acid isophthalic acid (the mass ratio of diamine to isophthalic acid is 1:2), the stabilizer is added in an amount of 8 wt% of caprolactam; Ice stone, added in an amount of 8 wt% of caprolactam;

The obtained prepolymer has a melt molecular weight of 4000, an oligomer content of 2%, wherein the cyclic dimer content is 0.1%, and the melt viscosity is 800 Pa·s;

The third stage is the liquid phase thickening stage: the liquid phase thickening kettle is used to polymerize under the pressure of 80Pa, and the polymerization temperature is gradually increased from 180°C to 280°C (divided into 10 stages, respectively 180°C -190°C-200°C-210°C-220°C-230°C-240°C-250°C-260°C-270°C-280°C), the liquid phase viscosity-increasing reaction time is 80min; at the same time adding the chain extender phosphate ester, the amount of chain extender added Is 0.5 wt% of caprolactam;

The obtained melt had a molecular weight of 15,960, a relative viscosity of 2.5, an oligomer content of 1.5% or less, and a cyclic dimer content of 0.2% or less. After the liquid phase thickening is completed, a nylon 6 polymer is obtained.

EXAMPLE 52 MELT DIRECT SPINNING METHOD OF NYLON 6 POLYMER

The nylon 6 polymer of Example 51 is directly applied to the composite spinning after the end of the liquid phase thickening reaction, the composite spinning is a side-by-side type, and the other component of the composite spinning except nylon 6 is nylon. 6T, the mass ratio of the nylon 6 polymer to another component is 3:7.

The spinning microporous cross-sectional shape of the above spinning is polygonal;

After the liquid phase thickening reaction is completed, the above-mentioned nylon 6 polymer is added with functional masterbatch or masterbatch in the melt transfer process, and uniformly mixed, and then directly spun according to the nylon 6 spinning process, and the amount of the nylon is added. 6 wt% of the polymer. The matrix of the functional masterbatch or masterbatch is polytrimethylene terephthalate. The functional auxiliary contained in the functional masterbatch is a flame retardant bis(hexachlorocyclopentadienyl)cyclooctane in an amount of 20% by weight of the functional masterbatch. The colorants used in the masterbatch are Pigment Orange 43 and Pigment Orange 68, and the mass ratio of Pigment Orange 43 to Pigment Orange 68 is 1:1.

After the liquid phase thickening reaction of the above nylon 6 polymer is completed, the polymer chips are added on-line during the melt transportation, and immediately mixed and directly spun according to the nylon 6 spinning process, and the polymer chip is added in a nylon amount. 6 50% by weight of the melt. The polymer slice is polybutylene terephthalate.

EXAMPLE 53 NYLON 6 POLYMERIZATION METHOD

Example 53 does not fall within the scope of the claimed invention but may be useful in understanding the invention.

A nylon 6 polymerization method is prepared by a stepwise polymerization method, and the specific preparation method is as follows:

The first stage is a ring-opening reaction stage: pre-polymerization is carried out by mixing caprolactam, water and a catalyst at a temperature of 150°C and a pressure of 0.8 MPa, and the ring-opening reaction time is 6 h; wherein the water content is 15 wt% of caprolactam, The catalyst content is 10% by weight of caprolactam, the catalyst is HNO3, NH3 and [Al(H2O)6] (HNO3, NH3 and [Al(H2O)6] mass ratio is 1:1:2); simultaneously adding lactone homopolymer (m=1, molecular weight 1000), the amount added is 10% by weight of caprolactam;

The obtained product has a number average molecular weight of 2000, an oligomer content of 30%, a cyclic dimer content of 0.1% or less, and a melt viscosity of 5 Pa·s;

The second stage is the pre-polycondensation stage: the product obtained by the ring-opening reaction is subjected to a polycondensation reaction under the conditions of a pressure of 150 Pa and a temperature of 180°C, and the pre-polycondensation reaction time is 3 hours; and the molecular weight stabilizer diamine p-phenylenediamine and the molecular weight stabilizer are simultaneously added. The aromatic dibasic acid isophthalic acid (the mass ratio of the diamine to the isophthalic acid is 1:2), the stabilizer is added in an amount of 8 wt% of the caprolactam; and the anion generating material is added to the icyrite in an amount of caprolactam. 8wt%;

The obtained prepolymer has a melt molecular weight of 4000, an oligomer content of 2%, wherein the cyclic dimer content is 0.1%, and the melt viscosity is 800 Pa·s;

The third stage is the liquid phase thickening stage: the liquid phase thickening kettle is used to polymerize under the pressure of 80Pa, and the polymerization temperature is gradually increased from 180°C to 280°C (divided into 10 stages, respectively 180°C -190°C-200°C-210°C-220°C-230°C-240°C-250°-C-260°C-270°C-280°C), the liquid phase viscosity-increasing reaction time is 80min; at the same time adding the chain extender phosphate ester, the amount of chain extender added Is 0.5 wt% of caprolactam;

The obtained melt had a molecular weight of 15,960, a relative viscosity of 2.5, an oligomer content of 1.5% or less, and a cyclic dimer content of 0.2% or less. After the liquid phase thickening is completed, a nylon 6 polymer is obtained.

## EXAMPLE 54 MELT DIRECT SPINNING METHOD OF NYLON 6 POLYMER

Example 54 does not fall within the scope of the claimed invention but may be useful in understanding the invention.

The nylon 6 polymer of Example 53 is directly applied to the composite spinning after the end of the liquid phase thickening reaction, the composite spinning is a side-by-side type, and the other component of the composite spinning except nylon 6 is nylon. 6T, the mass ratio of the nylon 6 polymer to another component is 3:7.

The spinning microporous cross-sectional shape of the above spinning is polygonal;

After the liquid phase thickening reaction is completed, the above-mentioned nylon 6 polymer is added with functional masterbatch or masterbatch in the melt transfer process, and uniformly mixed, and then directly spun according to the nylon 6 spinning process, and the amount of the nylon is added. 6 wt% of the polymer. The matrix of the functional masterbatch or masterbatch is polytrimethylene terephthalate. The functional auxiliary contained in the functional masterbatch is a flame retardant bis(hexachlorocyclopentadienyl)cyclooctane in an amount of 20% by weight of the functional masterbatch. The colorant used in the masterbatch is Pigment Orange 43.

After the liquid phase thickening reaction of the above nylon 6 polymer is completed, the polymer chips are added on-line during the melt transportation, and immediately mixed and directly spun according to the nylon 6 spinning process, and the polymer chip is added in a nylon amount. 6 50% by weight of the melt. The polymer slice is polybutylene terephthalate.

## EXAMPLE 55 NYLON 6 POLYMERIZATION METHOD

A nylon 6 polymerization method is prepared by a stepwise polymerization method, and the specific preparation method is as follows:

The first stage is a ring-opening reaction stage: prepolymerization of caprolactam, water and catalyst at a temperature of 210°C and a pressure of 2 MPa, the ring-opening reaction time is 6 h; wherein the water content is 15 wt% of caprolactam, the catalyst The content is 10wt% of caprolactam, the catalyst is HNO3, NH3 and [Al(H2O)6] (HNO3, NH3 and [Al(H2O)6] mass ratio 1:2:1); simultaneously adding lactone homopolymer ( m=1, molecular weight 1000), the amount added is 10% by weight of caprolactam;

The obtained product has a number average molecular weight of 2000, an oligomer content of 30%, a cyclic dimer content of 0.1% or less, and a melt viscosity of 5 Pa·s;

The second stage is the pre-polycondensation stage: the product obtained by the ring-opening reaction is subjected to polycondensation reaction under the conditions of a pressure of 150 Pa and a temperature of 180°C, and the pre-polycondensation reaction time is 3 hours; and the molecular weight stabilizer diamine naphthalene diamine and aromatic are simultaneously added. Group dibasic acid naphthalene dicarboxylic acid (the mass ratio of diamine to naphthalene dicarboxylic acid is 1:2), the stabilizer is added in an amount of 8 wt% of caprolactam; and the anion generating material is added to the ice stone at an amount of 8 wt% of caprolactam. The obtained prepolymer has a melt molecular weight of 4000, an oligomer content of 2%, wherein the cyclic dimer content is 0.1%, and the melt viscosity is 800 Pa·s;

The third stage is the liquid phase thickening stage: the liquid phase thickening kettle is used to polymerize under the pressure of 80Pa, and the polymerization temperature is gradually increased from 180°C to 280°C (divided into 10 stages, respectively 180°C -190°C-200°C-210°C-220°C-230°C-240°C-250°-C-260°C-270°C-280°C), the liquid phase viscosity-increasing reaction time is 80min; at the same time adding the chain extender phosphate ester, the amount of chain extender added Is 0.5 wt% of caprolactam;

The obtained melt had a molecular weight of 15,960, a relative viscosity of 2.5, an oligomer content of 1.5% or less, and a cyclic dimer content of 0.2% or less. After the liquid phase thickening is completed, a nylon 6 polymer is obtained.

## EXAMPLE 56 MELT DIRECT SPINNING METHOD OF NYLON 6 POLYMER

Example 56 does not fall within the scope of the claimed invention but may be useful in understanding the invention.

The nylon 6 polymer of Example 55 is directly spun according to the nylon 6 spinning process immediately after the end of the liquid phase thickening reaction, the spinning temperature is 240°C, the spinning speed is 4500 m / min, and the cooling air temperature is 25 °C. The wind speed is 0.6 m/s and the relative humidity is 60% to obtain a pre-oriented yarn.

The spinning microporous cross-sectional shape of the above spinning is a triangle;

After the liquid phase thickening reaction is completed, the above-mentioned nylon 6 polymer is added with functional masterbatch or masterbatch in the melt transfer process, and uniformly mixed, and then directly spun according to the nylon 6 spinning process, and the amount of the nylon is added. 6 wt% of the polymer. The matrix of the functional masterbatch or masterbatch is branched nylon. The functional additive contained in the functional masterbatch is an antibacterial agent iron oxide in an amount of 15% by weight of the functional masterbatch. The colorant used in the masterbatch is iron oxide yellow.

After the liquid phase thickening reaction of the above nylon 6 polymer is completed, the polymer chips are added on-line during the melt transportation, and immediately mixed and directly spun according to the nylon 6 spinning process, and the polymer chip is added in a nylon amount. 65% by weight of the melt. The polymer section is nylon 1212.

## EXAMPLE 57 NYLON 6 POLYMERIZATION METHOD

A nylon 6 polymerization method is prepared by a stepwise polymerization method, and the specific preparation method is as follows:

The first stage is a ring-opening reaction stage: prepolymerization of caprolactam, water and catalyst at a temperature of 210°C and a pressure of 2 MPa, the ring-opening reaction time is 6 h; wherein the water content is 15 wt% of caprolactam, the catalyst The content is 10wt% of caprolactam, the catalyst is HNO3, NH3 and [Al(H2O)6] (HNO3, NH3 and [Al(H2O)6] mass ratio 1:2:1); simultaneously adding lactone homopolymer ( m=1, molecular weight 1000), the amount added is 10% by weight of caprolactam;

The obtained product has a number average molecular weight of 2000, an oligomer content of 30%, a cyclic dimer content of 0.1% or less, and a melt viscosity of 5 Pa·s;

The second stage is a pre-polycondensation stage: the product obtained by the ring-opening reaction is subjected to a polycondensation reaction under the conditions of a pressure of 150 Pa and a temperature of 180°C, and the pre-polycondensation reaction time is 3 hours; and the molecular weight stabilizer diamine xylene diamine is added at the same time. The aromatic dibasic acid naphthalene dicarboxylic acid (the mass ratio of the diamine to naphthalenedicarboxylic acid is 1:2), the stabilizer is added in an amount of 8 wt% of the caprolactam; and the anion generating material is added to the kiwi, and the amount of the caprolactam is 8 wt. %;

The obtained prepolymer has a melt molecular weight of 4000, an oligomer content of 2%, wherein the cyclic dimer content is 0.1%, and the melt viscosity is 800 Pa·s;

The third stage is the liquid phase thickening stage: the liquid phase thickening kettle is used to polymerize under the pressure of 80Pa, and the polymerization temperature is gradually increased from 180°C to 280°C (divided into 10 stages, respectively 180°C -190°C-200°C-210°C-220°C-230°C-240°C-250°-C-260°C-270°C-280°C), the liquid phase viscosity-increasing reaction time is 80min; at the same time adding the chain extender phosphate ester, the amount of chain extender added Is 0.5 wt% of caprolactam;

The obtained melt had a molecular weight of 15,960, a relative viscosity of 2.5, an oligomer content of 1.5% or less, and a cyclic dimer content of 0.2% or less. After the liquid phase thickening is completed, a nylon 6 polymer is obtained.

EXAMPLE 58 MELT DIRECT SPINNING METHOD OF NYLON 6 POLYMER

Example 58 does not fall within the scope of the claimed invention but may be useful in understanding the invention.

The nylon 6 polymer of Example 57 is directly spun according to the nylon 6 spinning process after the end of the liquid phase thickening reaction, the spinning temperature is 240°C, the spinning speed is 4500 m / min, and the cooling air temperature is 25 °C. The wind speed is 0.6 m/s and the relative humidity is 60% to obtain a pre-oriented yarn.

The spinning microporous cross-sectional shape of the above spinning is a triangle;

After the liquid phase thickening reaction is completed, the above-mentioned nylon 6 polymer is added with functional masterbatch or masterbatch in the melt transfer process, and uniformly mixed, and then directly spun according to the nylon 6 spinning process, and the amount of the nylon is added. 6 wt% of the polymer. The matrix of the functional masterbatch or masterbatch is branched nylon. The functional additive contained in the functional masterbatch is an antibacterial agent iron oxide in an amount of 15% by weight of the functional masterbatch. The colorant used in the masterbatch is Pigment Yellow 214.

After the liquid phase thickening reaction of the above nylon 6 polymer is completed, the polymer chips are added on-line during the melt transportation, and immediately mixed and directly spun according to the nylon 6 spinning process, and the polymer chip is added in a nylon amount. 65% by weight of the melt. The polymer section is nylon 1212.

## Claims

1. A method for polymerizing nylon 6 **characterized in that** nylon 6 is prepared by a stepwise polymerization method, and the specific preparation method is as below:

    a first stage ring-opening reaction stage, wherein pre-polymerization is carried out by mixing caprolactam, water and a catalyst at a temperature of 150-220°C and at a pressure of 0.1-5 MPa and over a time of 3-12 hours to obtain a first product;

    the obtained first product has a number average molecular weight of 1,000- 2,000, an oligomer content of 10-30%, a cyclic dimer content of less than 0.1% or less, and a melt viscosity of 1-10 Pa·s;

    a second stage pre-polycondensation stage wherein the first product obtained by the ring-opening reaction is subjected to a polycondensation reaction under the conditions of a pressure of 10-200 Pa and a temperature of 180-220°C and over a time of 1-3 hours;

    the obtained prepolymer of the second stage has a melt molecular weight of 4,000 - 6,000, and an oligomer content of 2-8%, wherein the cyclic dimer content is 0.1%, and the melt viscosity is 1 - 100 Pa·s;

    a third stage being a kinetic strengthening stage polycondensation reaction comprising polymerization under the conditions of a pressure of 10-100Pa, wherein the polymerization temperature is gradually increased from 180-220°C to 220-280°C, and a polycondensation reaction kinetic strengthening process time is 10-90 min;

    the obtained melt product of the third stage has a molecular weight of 11,400 - 45,600, the relative viscosity is 2.0 - 5.0, and the oligomer content is below 1.5%, and wherein the cyclic dimer content is 0.2% or less;

    wherein in order to ensure the rapid removal of small molecules for rapid viscosity-increasing purposes, the polymerization temperature is gradually increased from 180-220°C to 220-280°C as a step heating method to ensure a melt viscosity of 1,000-4,000 Pa·s. after the kinetic strengthening of the polycondensation reaction, to obtain a nylon 6 polymer.

2. The method for polymerizing nylon 6 according to claim 1, wherein the water content is from 1 to 20% by weight of caprolactam and the catalyst content is from 1 to 20% by weight of caprolactam.

3. The method for polymerizing nylon 6 according to claim 1, wherein the catalyst is an amino acid and / or a protic acid, and the protic acid is HCl, $H_3PO_4$, $H_2SO_4$, $HNO_3$, NH. $_3$, or $[Al(H_2O)_6]$.

4. The method for polymerizing nylon 6 according to claim 3, wherein the amino acid is an aliphatic amino acid or an aromatic amino acid, and the aliphatic amino acid has a molecular formula of $NH_2(CH_2)_xCOOH$, wherein x= 1~16, and the aromatic amino acid has a benzene ring in a main chain or a branch, and is a phenylalanine.

5. The method for polymerizing nylon 6 according to claim 1, wherein the step temperature rise refers to a temperature ranging from 180-220°C to 220-280°C divided into 2 to 10 stages to a achieve temperature-dependent polycondensation reaction, and wherein the temperature is gradually rising.

6. The method for polymerizing nylon 6 according to claim 1, wherein the kinetic strengthening process of the polycondensation reaction is carried out by using a liquid phase thickening kettle.

**7.** The method for polymerizing nylon 6 according to claim 1, wherein the ring-opening stage the pre-polycondensation or the kinetic strengthening stage of the polycondensation reaction is further added with a lactam, a lactone or a polymer thereof, wherein the amount added is 50% or less by weight of caprolactam.

**8.** The method for polymerizing nylon 6 according to claim 1, wherein the ring-opening stage, the pre-polycondensation or the kinetic strengthening stage of the polycondensation reaction further adds a functional additive, which is an antioxidant and an ultraviolet-resistant agent, antibacterial agent, flame retardant, negative ion generating material, fluorescent material, carbon nanotube or graphene, added in an amount of 0.01-10% by weight of caprolactam.

**9.** The method for polymerizing nylon 6 according to claim 8, wherein the antioxidant is antioxidant 1010, antioxidant 168 or antioxidant 616. and the anti-UV agent is salicylic acid and benzophenone benzoate, Triazole, titanium dioxide, zinc oxide, calcium carbonate, talc or SEED, the antibacterial agent is nano titanium dioxide, zinc oxide, iron oxide, chitosan, nano silver, nano copper or quaternary ammonium compound, the flame retardant is boric acid, Zinc, tetrabromobisphenol A, bis (hexachlorocyclopentadienyl) cyclooctane, ammonium polyphosphate, decabromodiphenyl ether or 1,3,6- tris (4,6 -diamino -2- thio Triazine) or a mixture of hexane and cyanuric acid; the negative ion generating material is chert, tourmaline, opal or genius; the fluorescent material uses alkaline earth metal sulfide and aluminate as the luminescent substrate, and a rare earth lanthanide Europium, Samarium, erbium or neodymium is used as an activator.

**10.** A method of melt direct spinning of a nylon 6 polymer, said method comprising:

performing polymerization of nylon 6 by a polymerization method as claimed in claim 1 to obtain said nylon 6 polymer; and
direct spinning said nylon 6 polymer,
wherein:

said nylon 6 polymer in the polycondensation reaction kinetics of the process strengthens the end of the immediately direct spinning of nylon 6 spinning process,
the spinning temperature is 240-280°C,
the spinning speed is 4500-6000 m / min,
a cooling air temperature is 15-20°C, a wind speed is 0.3-0.5 m/s,
a relative humidity is 80%-90%, and a high orientation silk is obtained.

**11.** The melt direct spinning method according to claim 10, wherein the spinning is microporous, and a cross-sectional shape of the spinning is triangular, cross, polygonal, hollow fiber, U -shaped, T -shaped, Y -shaped, polygonal or I-shaped.

**12.** The melt direct spinning method according to claim 10, wherein the nylon 6 polymer is functionally added online during the melt transport process after the kinetic strengthening process of the polycondensation reaction, the masterbatch is uniformly mixed and then directly spun according to the nylon 6 spinning process, and the amount added is 1-30% by weight of the nylon 6 polymer.

**13.** The melt direct spinning method according to claim 12, wherein the matrix of the functional masterbatch or masterbatch is one or more of nylon, polyester, and polyethylene glycol.

**14.** The melt direct spinning method according to claim 13, wherein the nylon is nylon 6, nylon 6T, nylon 612, nylon 610, nylon 1212, nylon 46, nylon 410, nylon 11, nylon 12, nylon 26, one or more of nylon 212 and branched nylon; the polyester is one or more of polyethylene terephthalate, polybutylene terephthalate, polytrimethylene terephthalate, water-soluble polyester; the polyethylene glycol has a molecular weight in the range of 400 to 20,000; a polyethylene glycol end group is a hydroxyl group, or a polyethylene glycol having a modified terminal group of a carboxyl group and / or an amino group.

**15.** The melt direct spinning method according to claim 12, wherein the functional additive contained in the functional masterbatch is an antioxidant, an ultraviolet ray inhibitor, an antibacterial agent, a flame retardant, or an anion generating material; and the fluorescent material, carbon nanotubes or graphene is contained in an amount of 10-30% by weight of the functional masterbatch.

**16.** The melt direct spinning method according to claim 15, wherein the antioxidant is an antioxidant 1010, an antioxidant 168, or an antioxidant 61; and the anti-UV agent is salicylic acid or benzophenone-based benzoate, Triazole, titanium dioxide, zinc oxide, calcium carbonate, talc, SEED; the antibacterial agent is nano titanium dioxide, zinc oxide, iron oxide, chitosan, nano silver, nano copper or a quaternary ammonium salt compound, Zinc, tetrabromobisphenol A, bis (hexachlorocyclopentadienyl) cyclooctane, ammonium polyphosphate, decabromodiphenyl ether or 1,3,6- tris (4,6 - diamino -2- thio Triazine ), or a mixture of hexane and cyanuric acid; and the negative ion generating material is chert, tourmaline, opal or gems; the fluorescent material is an alkali earth metal sulfide, aluminate as a luminescent substrate, and a rare earth lanthanide; and the element Europium, Samarium, erbium or neodymium acts as an activator.

**17.** The melt direct spinning method according to claim 12, wherein the coloring agent used in the masterbatch is phthalocyanine red, phthalocyanine blue, phthalocyanine green, light fast red, macromolecular red, macromolecule Yellow, permanent solid yellow, permanent solid purple, azo red, cadmium red, cadmium yellow, titanium dioxide, carbon black, iron oxide red, iron oxide yellow, pigment red 179, pigment blue 60, pigment green 36, pigment yellow 214, Pigment orange 43, pigment orange 68, pigment brown 41, pigment yellow 184, solvent violet 59, solvent violet 37, solvent red 143, solvent red 181, solvent blue 94, solvent blue 132, solvent green 29, solvent yellow 135, and solvent yellow 167.

**18.** The melt direct spinning method according to claim 10, wherein the nylon 6 polymer is added to the polymer in the melt transfer process after the kinetic strengthening process of the polycondensation reaction; the chips are directly spun according to the nylon 6 spinning process immediately after mixing; and the polymer chips are added in an amount of 5 to 50% by weight of the nylon 6 melt.

**19.** The melt direct spinning method according to claim 18, wherein the polymer chip is one or more of: polyester, nylon, and polyethylene glycol.

**20.** The melt direct spinning method according to claim 18, wherein the polyester is: polyethylene terephthalate, polybutylene terephthalate, polytrimethylene terephthalate, or a water soluble polyester; the nylon is one or more of: nylon 6, nylon 6T, nylon 612, nylon 610, nylon 1212, nylon 46, nylon 410, nylon 11, nylon 12, nylon 26, nylon 212, branched nylon; the polyethylene glycol has a molecular weight in the range of 400 to 20,000, and a polyethylene glycol end group is a hydroxyl group, or a polyethylene glycol having a modified terminal group of a carboxyl group and / or an amino group.

## Patentansprüche

**1.** Verfahren zum Polymerisieren von Nylon 6, **dadurch gekennzeichnet, dass** Nylon 6 durch ein stufenweises Polymerisationsverfahren hergestellt wird, und das spezifische Herstellungsverfahren ist wie folgt:

eine Ringöffnungsreaktionsstufe der ersten Stufe, wobei die Vorpolymerisation durch Mischen von Caprolactam, Wasser und einem Katalysator bei einer Temperatur von 150 bis 220 °C und bei einem Druck von 0,1 bis 5 MPa und über eine Zeit von 3 bis 12 Stunden durchgeführt wird, um ein erstes Produkt zu erhalten;

Das erhaltene erste Produkt hat ein durchschnittliches Molekulargewicht von 1.000 bis 2.000, einen Oligomergehalt von 10 bis 30 %, einen cyclischen Dimergehalt von weniger als 0,1 % oder weniger und eine Schmelzviskosität von 1 bis 10 Pa·s;

eine Vorpolykondensationsstufe der zweiten Stufe, wobei das erste Produkt, das durch die Ringöffnungsreaktion erhalten wird, einer Polykondensationsreaktion unter den Bedingungen eines Drucks von 10 bis 200 Pa und einer Temperatur von 180 bis 220 °C und über einen Zeitraum von 1 bis 3 Stunden unterzogen wird;

Das erhaltene Prepolymer der zweiten Stufe hat ein Schmelzmolekulargewicht von 4.000 - 6.000 und einen Oligomergehalt von 2-8 %, wobei der Gehalt an zyklischen Dimeren 0,1 % und die Schmelzviskosität 1 - 100 Pa·s beträgt;

eine dritte Stufe ist eine Polykondensationsreaktion der kinetischen Verstärkungsstufe, die die Polymerisation unter den Bedingungen eines Drucks von 10-100 Pa umfasst, wobei die Polymerisationstemperatur allmählich von 180-220 °C auf 220-280 °C erhöht wird, und eine kinetische Verstärkungsprozesszeit der Polykondensationsreaktion beträgt 10-90 min;

Das erhaltene Schmelzprodukt der dritten Stufe hat ein Molekulargewicht von 11.400 - 45.600, die relative Viskosität beträgt 2,0 - 5,0 und der Oligomergehalt liegt unter 1,5 %, und wobei der zyklische Dimergehalt 0,2 % oder weniger beträgt;

Wobei zur Gewährleistung der schnellen Entfernung kleiner Moleküle für Zwecke zur schnellen Erhöhung der Viskosität die Polymerisationstemperatur allmählich von 180-220 °C auf 220-280 °C als Stufenheizverfahren erhöht wird, um eine Schmelzviskosität von 1.000-4.000 Pa·s nach der kinetischen Verstärkung der Polykondensationsreaktion zu gewährleisten, um ein Nylon-6-Polymer zu erhalten.

**2.** Verfahren zum Polymerisieren von Nylon 6 nach Anspruch 1, wobei der Wassergehalt 1 bis 20 Gew.-% Caprolactam und der Katalysatorgehalt 1 bis 20 Gew.-% Caprolactam beträgt.

**3.** Verfahren zum Polymerisieren von Nylon 6 nach Anspruch 1, wobei der Katalysator eine Aminosäure und/oder eine protische Säure ist und die protische Säure HCl, H3PO4, H2SO4, HNO3, NH ist. 3 oder [Al(H 2 O) 6 ].

**4.** Verfahren zum Polymerisieren von Nylon 6 nach

Anspruch 3, wobei die Am inosäure eine aliphatische Aminosäure oder eine aromatische Aminosäure ist und die aliphatische Aminosäure eine Summenformel von NH2 (CH2 ) x COOH aufweist, wobei x = 1 ~ 16 und die aromatische Aminosäure einen Benzolring in einer Hauptkette oder einem Zweig aufweist, und ist ein Phenylalanin.

**5.** Verfahren zum Polymerisieren von Nylon 6 nach Anspruch 1, wobei sich der stufenweise Temperaturanstieg auf eine Temperatur im Bereich von 180 bis 220 °C bis 220 bis 280 °C bezieht, die in 2 bis 10 Stufen unterteilt ist, um eine temperaturabhängige Polykondensationsreaktion zu erzielen, und wobei die Temperatur allmählich ansteigt.

**6.** Verfahren zum Polymerisieren von Nylon 6 nach Anspruch 1, wobei der kinetische Verstärkungsprozess der Polykondensationsreaktion unter Verwendung eines Flüssigphasenverdickungskessels durchgeführt wird.

**7.** Verfahren zum Polymerisieren von Nylon 6 nach Anspruch 1, wobei die Ringöffnungsstufe, die Präpolykondensationsstufe oder die kinetische Verstärkungsstufe der Polykondensationsreaktion, weiterhin mit einem Lactam, einem Lacton oder einem Polymer davon versetzt wird, wobei die zugesetzte Menge 50 Gew.-% oder weniger Caprolactam beträgt.

**8.** Verfahren zum Polymerisieren von Nylon 6 nach Anspruch 1, wobei die Ringöffnungsstufe, die Vorpolykondensationsstufe oder die kinetische Verstärkungsstufe der Polykondensationsreaktion ferner ein funktionelles Additiv hinzufügt, das ein Antioxidans und ein UV-beständiges Mittel ist, ein antibakterielles Mittel, ein Flammschutzmittel, ein negatives Ionenerzeugungsmaterial, fluoreszierendes Material, ein Kohlenstoffnanoröhre oder Graphen, das in einer Menge von 0,01 bis 10 Gew.-% Caprolactam zugesetzt wird.

**9.** Verfahren zum Polymerisieren von Nylon 6 nach Anspruch 8, wobei das Antioxidans das Antioxidans 1010, das Antioxidans 168 oder das Antioxidationsmittel 616 ist. und das Anti-UV-Mittel Salicylsäure und Benzophenonbenzoat, Triazol, Titandioxid, Zinkoxid, Calciumcarbonat, Talk oder SEED ist, das antibakterielle Mittel Nano-Titandioxid, Zinkoxid, Eisenoxid, Chitosan, Nanosilber, Nanokupfer- oder quartäre Ammoniumverbindung, das Flammschutzmittel ist Borsäure, Zink, Tetrabromisphenol A, Bis(hexachlorcyclopentadienyl)-cyclooctan, Ammoniumpolyphosphat, Decabromdiphenylether oder 1,3,6-Tris (4,6-diamino-2-thio-Triazin) oder ein Gemisch aus Hexan und Cyanursäure; Das negative Ionen erzeugende Material ist Hornstein, Turmalin, Opal oder Genius; Das fluoreszierende Material verwendet Erdalkalimetallsulfid und Aluminat als lumineszierendes Substrat, und als Aktivator wird ein Seltenerd-Lanthanid Europium, Samarium, Erbium oder Neodym verwendet.

**10.** Verfahren zum Schmelzdirektspinnen eines Nylon-6-Polymers, wobei das Verfahren umfasst:

Durchführen der Polymerisation von Nylon 6 durch ein Polymerisationsverfahren nach Anspruch 1 zur Herstellung des Nylon-6-Polymers; und
direktes Spinnen des Nylon-6-Polymers, worin:

das Nylon-6-Polymer in der Polykondensationsreaktionskinetik des Verfahrens das Ende des unmittelbar direkten Spinnens des Nylon-6-Spinnprozesses verstärkt,
die Spinntemperatur beträgt 240-280°C,
Die Schleudergeschwindigkeit beträgt 4500-6000 m / min,
die Kühllufttemperatur beträgt 15-20°C, die Windgeschwindigkeit 0,3-0,5 m/s,
Die relative Luftfeuchtigkeit beträgt 80%-90%, und es wird eine Seide mit hoher Ausrichtung erhalten.

**11.** Schmelze-Direktspinnverfahren nach Anspruch 10, wobei das Spinnen mikroporös ist und eine Querschnittsform des Spinnens dreieckig, quer, polygonal, Hohlfaser, U-förmig, T-förmig, Y-förmig, polygonal oder I-förmig ist.

**12.** Schmelzdirektspinnverfahren nach Anspruch 10, wobei das Nylon-6-Polymer während des Schmelztransportprozesses nach dem kinetischen Verstärkungsprozess der Polykondensationsreaktion funktionell online zugegeben wird, das Masterbatch gleichmäßig gemischt und dann direkt gemäß dem Nylon-6-Spinnverfahren gesponnen wird, und die zugesetzte Menge 1-30 Gew.-% des Nylon-6-Polymers beträgt.

**13.** Schmelze-Direktspinnverfahren nach Anspruch 12, wobei die Matrix des funktionellen Masterbatches oder Masterbatches eine oder mehrere aus Nylon, Polyester und Polyethylenglykol ist.

**14.** Schmelz-Direktspinnverfahren nach Anspruch 13, wobei das Nylon Nylon 6, Nylon 6T, Nylon 612, Nylon 610, Nylon 1212, Nylon 46, Nylon 410, Nylon 11, Nylon 12, Nylon 26, eines oder mehrere Nylon 212 und verzweigtes Nylon ist; das Polyester besteht aus Polyethylenterephthalat, Polybutylenterephthalat, Polytrimethylenterephthalat, wasserlöslichem Polyester; Das Polyethylenglykol hat ein Molekulargewicht im Bereich von 400 bis 20.000; Eine Polyethylenglykol-Endgruppe ist eine Hydroxylgruppe oder ein Polyethylenglykol mit einer modifizierten terminalen Gruppe einer Carboxylgruppe und/oder einer Aminogruppe.

**15.** Schmelze-Direktspinnverfahren nach Anspruch 12, wobei das in dem funktionelle Masterbatch enthaltene funktionelle Additiv ein Antioxidans, ein UV-Strahleninhibitor, ein antibakterielles Mittel, ein Flammschutzmittel oder ein anionenerzeugendes Material ist; und das fluoreszierende Material, Kohlenstoffnanoröhren oder Graphen ist in einer Menge von 10-30 Gew.-% des funktionellen Masterbatches enthalten.

**16.** Schmelz-Direktspinnverfahren nach Anspruch 15, wobei das Antioxidans ein Antioxidans 1010, ein Antioxidans 168 oder ein Antioxidans 61 ist und das Anti-UV-Mittel Salicylsäure oder Benzophenon-basiertes Benzoat, Triazol, Titandioxid, Zinkoxid, Calciumcarbonat, Talkum, SEED ist; das antibakterielle Mittel ist Nano-Titandioxid, Zinkoxid, Eisenoxid, Chitosan, Nanosilber, Nanokupfer oder eine quartäre Ammoniumsalzverbindung, Zink, Tetrabromisphenol A, Bis(hexachlorcyclopentadienyl)-cyclooctan, Ammoniumpolyphosphat, Decabromdiphenylether oder 1,3,6-Tris (4,6-diamino-2-thio-Triazin) oder ein Gemisch aus Hexan und Cyanursäure; und das Material zur Erzeugung negativer Ionen ist Hornstein, Turmalin, Opal oder Edelsteine; Das fluoreszierende Material ist ein Erdalkalimetallsulfid, Aluminat als lumineszierendes Substrat und ein Seltenerd-Lanthanid; und das Element Europium, Samarium, Erbium oder Neodym wirkt als Aktivator.

**17.** Schmelze-Direktspinnverfahren nach Anspruch 12, wobei das in dem Masterbatch verwendete Farbstoff Phthalocyaninrot, Phthalocyaninblau, Phthalocyaningrün, helles festes Rot, makromolekulares Rot, Makromolekül Gelb, permanentes festes Gelb, permanentes festes Purpur, Azorot, Cadmiumrot, Cadmiumgelb, Titandioxid, Ruß, Eisenoxidrot, Eisenoxidgelb, Pigmentrot 179 ist, Pigment Blau 60, Pigment Grün 36, Pigment Gelb 214, Pigment Orange 43, Pigment Orange 68, Pigment Braun 41, Pigment Gelb 184, Lösungsmittelviolett 59, Lösungsmittelviolett 37, Lösungsmittelrot 143, Lösungsmittelrot 181, Lösungsmittelblau 94, Lösungsmittelblau 132, Lösungsmittelgrün 29, Lösungsmittelgelb 135 und Lösungsmittelgelb 167.

**18.** Schmelze-Direktspinnverfahren nach Anspruch 10, wobei das Nylon-6-Polymer dem Polymer im Schmelzetransferverfahren nach dem kinetischen Verstärkungsprozess der Polykondensationsreaktion zugesetzt wird; Die Späne werden unmittelbar nach dem Mischen direkt nach dem Nylon-6-Spinnverfahren geschleudert; Und die Polymerchips werden in einer Menge von 5 bis 50 Gew.-% der Nylon-6-Schmelze zugegeben.

**19.** Schmelz-Direktspinnverfahren nach Anspruch 18, wobei der Polymerchip einer oder mehrere der folgenden Bestandteile ist: Polyester, Nylon und Polyethylenglykol.

**20.** Schmelz-Direktspinnverfahren nach Anspruch 18, wobei der Polyester Polyethylenterephthalat, Polybutylenterephthalat, Polytrimethylenterephthalat oder ein wasserlöslicher Polyester ist; das Nylon ist eines oder mehrere von: Nylon 6, Nylon 6T, Nylon 612, Nylon 610, Nylon 1212, Nylon 46, Nylon 410, Nylon 11, Nylon 12, Nylon 26, Nylon 212, verzweigtes Nylon; Das Polyethylenglykol hat ein Molekulargewicht im Bereich von 400 bis 20.000, und eine Polyethylenglykol-Endgruppe ist eine Hydroxylgruppe oder ein Polyethylenglykol mit einer modifizierten terminalen Gruppe einer Carboxylgruppe und/oder einer Aminogruppe.

## Revendications

**1.** Procédé de polymérisation du nylon 6 **caractérisé en ce que** le nylon 6 est préparé par une méthode de polymérisation par étapes, et la méthode de préparation spécifique est la suivante :

une première étape de réaction d'ouverture de cycle, dans laquelle la prépolymérisation est effectuée en mélangeant du caprolactame, de l'eau et un catalyseur à une température de 150-220°C et à une pression de 0,1-5 MPa et sur un temps de 3-12 heures pour obtenir un premier produit ;
le premier produit obtenu a un poids moléculaire moyen en nombre de 1 000 à 2 000, une teneur en oligomères de 10 à 30 %, une teneur en dimères cycliques inférieure ou égale à 0,1 % et une viscosité à l'état fondu de 1 à 10 Pa·s ;
une deuxième étape de pré-polycondensation dans laquelle le premier produit obtenu par la réaction d'ouverture du cycle est soumis à une réaction de polycondensation dans des conditions de pression de 10-200 Pa et de température de 180-220°C et sur un temps de 1-3 heures ;
le prépolymère obtenu de la deuxième étape a un poids moléculaire à l'état fondu de 4 000 à 6 000 et une teneur en oligomères de 2 à 8 %, la teneur en dimères cycliques étant de 0,1 % et la viscosité à l'état fondu étant de 1 à 100 Pa·s ;
une troisième étape étant une réaction de polycondensation par étape de renforcement cinétique comprenant la polymérisation dans des conditions de pression de 10 à 100 Pa, dans laquelle la température de polymérisation est progressivement augmentée de 180-220 °C à 220-280 °C, et le temps de processus de renforcement cinétique d'une réaction de polycondensation est de 10 à 90 min ;
le produit fondu obtenu de la troisième étape a un poids moléculaire de 11 400 à 45 600, la viscosité relative est de 2,0 à 5,0 et la teneur en oligomères est inférieure à 1,5 %, et la teneur en dimères cycliques est de 0,2 % ou moins ;
dans lequel, afin d'assurer l'élimination rapide de petites molécules à des fins d'augmentation rapide de la viscosité, la température de polymérisation est progressivement augmentée de 180-220 °C à 220-280 °C en tant que méthode de chauffage par étapes pour assurer une viscosité à l'état fondu de 1 000 à 4 000 Pa.s. après le renforcement cinétique de la réaction de polycondensation, pour obtenir un polymère de nylon 6.

**2.** Procédé de polymérisation du nylon 6 selon la revendication 1, dans lequel la teneur en eau est de 1 à 20 % en poids de caprolactame et la teneur en catalyseur est de 1 à 20 % en poids de caprolactame.

**3.** Procédé de polymérisation du nylon 6 selon la revendication 1, dans lequel le catalyseur est un acide aminé et/ou un acide protique, et l'acide protique est HCl, $H_3PO_4$, $H_2SO_4$, $HNO_3$, NH. $_3$, ou $[Al(H_2O)_6]$.

**4.** Procédé de polymérisation du nylon 6 selon la revendication 3, dans lequel l'acide aminé est un acide aminé aliphatique ou un acide aminé aromatique, et l'acide aminé aliphatique a une formule moléculaire de $NH_2(CH_2)_xCOOH$, dans lequel x= 1-16, et l'acide aminé aromatique a un cycle benzénique dans une chaîne principale ou une branche, et est une phénylalanine.

**5.** Procédé de polymérisation du nylon 6 selon la revendication 1, dans lequel l'élévation de température par paliers se réfère à une température allant de 180-220°C à 220-280°C divisée en 2 à 10 étapes pour obtenir une réaction de polycondensation dépendante de la température, et dans lequel la température augmente progressivement.

**6.** Procédé de polymérisation du nylon 6 selon la revendication 1, dans lequel le processus de renforcement cinétique de la réaction de polycondensation est réalisé à l'aide d'une bouilloire épaississante en phase liquide.

**7.** Procédé de polymérisation du nylon 6 selon la revendication 1, dans lequel l'étape d'ouverture du cycle, la pré-polycondensation ou l'étape de renforcement cinétique de la réaction de polycondensation est ajoutée avec un lactame, une lactone ou un polymère de ceux-ci, la quantité ajoutée étant égale ou inférieure à 50 % en poids de caprolactame.

**8.** Procédé de polymérisation du nylon 6 selon la revendication 1, dans lequel l'étape d'ouverture du cycle, la pré-polycondensation ou l'étape de renforcement cinétique de la réaction de polycondensation ajoute en outre un additif fonctionnel, qui est un antioxydant et un agent résistant aux ultraviolets, un agent antibactérien, un retardateur de flamme, un matériau générateur d'ions négatifs, un matériau fluorescent, un nanotube de carbone ou du graphène, ajouté en quantité de 0,01 à 10 % en poids de caprolactame.

**9.** Procédé de polymérisation du nylon 6 selon la revendication 8, dans lequel l'antioxydant est l'antioxydant 1010, l'antioxydant 168 ou l'antioxydant 616. et l'agent anti-UV est l'acide salicylique et le benzoate de benzophénone, le triazole, le dioxyde de titane, l'oxyde de zinc, le carbonate de calcium, le talc ou la graine, l'agent antibactérien est le dioxyde de titane nano, l'oxyde de zinc, l'oxyde de fer, le chitosane, le nano argent, composé de nano cuivre ou d'ammonium quaternaire, le retardateur de flamme est l'acide borique, le zinc, le tétrabromobisphénol A, le bis (hexachlorocyclopentadiényl) cyclooctane, le polyphosphate d'ammonium, le décabromodiphényléther ou le 1,3,6-tris (4,6-diamino -2-thio Triazine) ou un mélange d'hexane et d'acide cyanurique ; le matériau générateur d'ions négatifs est le chert, la tourmaline, l'opale ou le génie ; le matériau fluorescent utilise du sulfure et de l'aluminate de métal alcalino-terreux comme substrat luminescent, et un lanthanide de terre rare, de l'europium, du samarium, de l'erbium ou du néodyme est utilisé comme activateur.

**10.** Procédé de filage direct à l'état fondu d'un polymère de nylon 6, ledit procédé comprenant :

polymérisation réalisée du nylon 6 par un procédé de polymérisation selon la revendication 1 pour obtenir ledit polymère de nylon 6 ; et
filature directe ledit polymère de nylon 6,
Où:

ledit polymère de nylon 6 dans la cinétique de réaction de polycondensation du processus renforce la fin de la filature immédiatement directe du processus de filage de nylon 6,
la température de rotation est de 240-280°C,

la vitesse de rotation est de 4500-6000 m / min,
une température de l'air de refroidissement est de 15-20°C, une vitesse du vent est de 0,3-0,5 m / s,
Une humidité relative est de 80 % à 90 % et une soie de haute orientation est obtenue.

**11.** Procédé de filage direct à l'état fondu selon la revendication 10, dans lequel le filage est microporeux et une forme de section transversale du filage est triangulaire, transversale, polygonale, à fibres creuses, en forme de U, en forme de T, en forme de Y, polygonale ou en forme de I.

**12.** Procédé de filage direct à l'état fondu selon la revendication 10, dans lequel le polymère de nylon 6 est ajouté fonctionnellement en ligne pendant le processus de transport de la matière fondue après le processus de renforcement cinétique de la réaction de polycondensation, le mélange-maître est uniformément mélangé puis filé directement selon le processus de filage de nylon 6, et la quantité ajoutée est de 1 à 30 % en poids du polymère de nylon 6.

**13.** Procédé de filage direct à l'état fondu selon la revendication 12, dans lequel la matrice du mélange-maître fonctionnel ou du mélange-maître est un ou plusieurs composés de nylon, de polyester et de polyéthylène glycol.

**14.** Procédé de filage direct à l'état fondu selon la revendication 13, dans lequel le nylon est le nylon 6, le nylon 6T, le nylon 612, le nylon 610, le nylon 1212, le nylon 46, le nylon 410, le nylon 11, le nylon 12, le nylon 26, un ou plusieurs de nylon 212 et le nylon ramifié ; le polyester est l'un ou plusieurs des polyesters suivants : polyéthylène téréphtalate, polybutylène téréphtalate, polytriméthylène téréphtalate, polyester hydrosoluble ; le polyéthylène glycol a un poids moléculaire de l'ordre de 400 à 20 000 ; Un groupe terminal polyéthylène glycol est un groupe hydroxyle, ou un polyéthylène glycol ayant un groupe terminal modifié d'un groupe carboxyle et/ou d'un groupe amino.

**15.** Procédé de filage direct à l'état fondu selon la revendication 12, dans lequel l'additif fonctionnel contenu dans le mélange-maître fonctionnel est un antioxydant, un inhibiteur de rayons ultraviolets, un agent antibactérien, un retardateur de flamme ou un matériau générateur d'anions ; et le matériau fluorescent, les nanotubes de carbone ou le graphène sont contenus dans une quantité de 10 à 30 % en poids du mélange-maître fonctionnel.

**16.** Procédé de filage direct à l'état fondu selon la revendication 15, dans lequel l'antioxydant est un antioxydant 1010, un antioxydant 168 ou un antioxydant 61 ; et l'agent anti-UV est l'acide salicylique ou le benzoate à base de benzophénone, le triazole, le dioxyde de titane, l'oxyde de zinc, le carbonate de calcium, le talc, la graine ; l'agent antibactérien est le dioxyde de titane nano, l'oxyde de zinc, l'oxyde de fer, le chitosane, le nano argent, nano cuivre ou un composé de sel d'ammonium quaternaire, zinc, tétrabromobisphénol A, bis (hexachlorocyclopentadiényl) cyclooctane, polyphosphate d'ammonium, décabromodiphényléther ou 1,3,6-tris (4,6-diamino -2- thio triazine ), ou un mélange d'hexane et d'acide cyanurique ; et le matériau générateur d'ions négatifs est le chert, la tourmaline, l'opale ou les pierres précieuses ; Le matériau fluorescent est un sulfure de métal alcalino-terreux, de l'aluminate comme substrat luminescent et un lanthanide de terre rare ; et l'élément europium, samarium, erbium ou néodyme agit comme un activateur.

**17.** Procédé de filage direct à l'état fondu selon la revendication 12, dans lequel l'agent colorant utilisé dans le mélange-maître est le rouge de phtalocyanine, le bleu de phtalocyanine, le vert de phtalocyanine, le rouge résistant à la lumière, le rouge macromoléculaire, le jaune de macromolécule, le jaune solide permanent, le violet solide permanent, le rouge azoïque, le rouge de cadmium, le jaune de cadmium, le dioxyde de titane, le noir de carbone, le rouge d'oxyde de fer, le jaune d'oxyde de fer 179, Pigment bleu 60, Pigment vert 36, Pigment jaune 214, Pigment orange 43, Pigment orange 68, Pigment brun 41, Pigment jaune 184, Solvent Violet 59, Solvant Violet 37, Rouge solvant 143, Rouge solvant 181, Bleu solvant 94, Bleu solvant 132, Vert solvant 29, Jaune solvant 135 et Jaune solvant 167.

**18.** Procédé de filage direct à l'état fondu selon la revendication 10, dans lequel le polymère de nylon 6 est ajouté au polymère dans le processus de transfert de matière fondue après le processus de renforcement cinétique de la réaction de polycondensation ; Les copeaux sont directement filés selon le processus de filage du Nylon 6 immédiatement après le mélange ; Et les copeaux de polymère sont ajoutés dans une quantité de 5 à 50 % en poids de Nylon 6 fondu.

**19.** Procédé de filage direct à l'état fondu selon la revendication 18, dans lequel la puce de polymère est constituée d'un ou de plusieurs des éléments suivants : polyester, nylon et polyéthylène glycol.

**20.** Procédé de filage direct à l'état fondu selon la revendication 18, dans lequel le polyester est : du polyéthylène téréphtalate, du polybutylène téréphtalate, du polytriméthylène téréphtalate, ou un polyester soluble dans l'eau ; le nylon est un ou plusieurs des éléments suivants : nylon 6, nylon 6T, nylon 612, nylon 610, nylon 1212, nylon 46, nylon 410, nylon 11, nylon 12, nylon 26, nylon 212, nylon ramifié ; Le polyéthylène glycol a un poids moléculaire compris entre 400 et 20 000, et un groupe final de polyéthylène glycol est un groupe hydroxyle, ou un polyéthylène glycol ayant un groupe terminal modifié d'un groupe carboxyle et/ou d'un groupe amino.

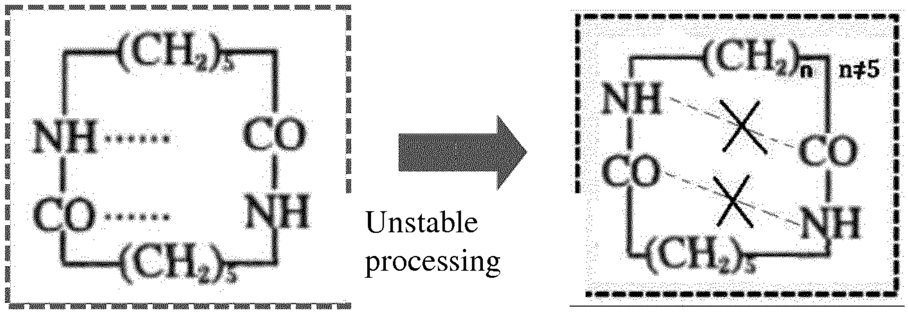
Unstable
processing

*fig. 1*

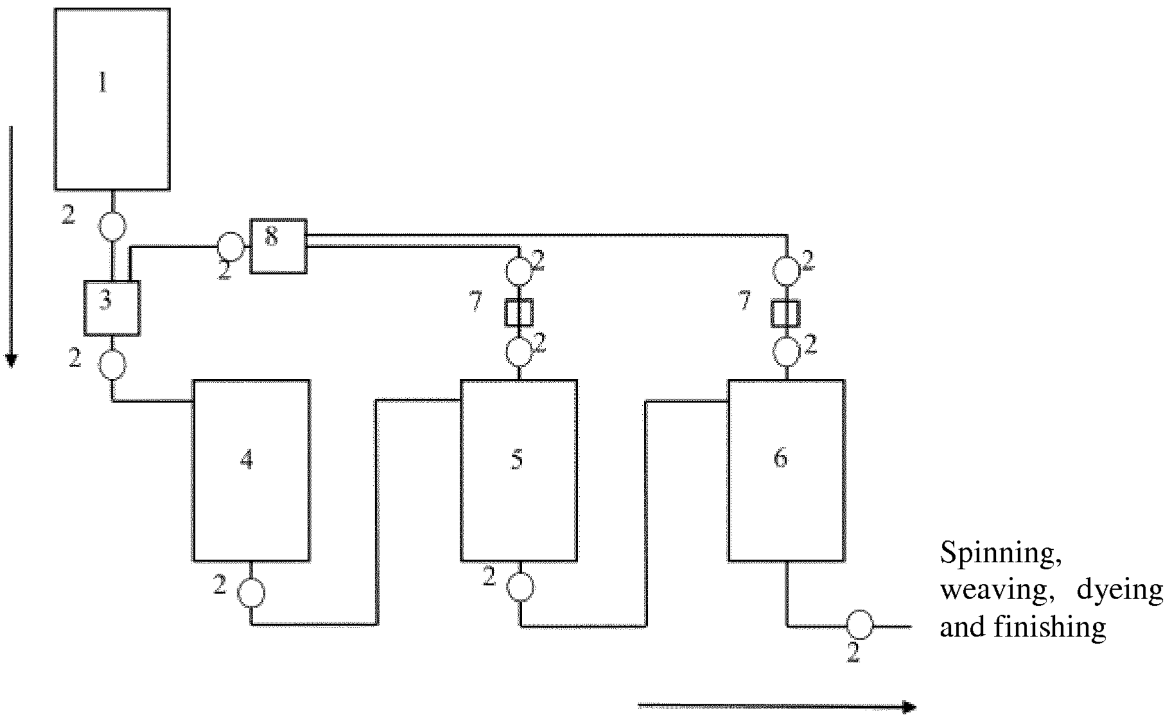
1
2
3
4
5
6
7
8
Spinning,
weaving, dyeing
and finishing

*fig. 2*

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 4310659 A